(19) **Europäisches Patentamt**

**European Patent Office**

**Office européen des brevets**

(11) **EP 1 198 864 B1**

(12) **FASCICULE DE BREVET EUROPEEN**

(45) Date de publication et mention
de la délivrance du brevet:
**27.08.2003 Bulletin 2003/35**

(21) Numéro de dépôt: **00949560.7**

(22) Date de dépôt: **28.06.2000**

(51) Int Cl.⁷: **H01Q 1/28**, H04B 7/185,
H04B 7/204, H04B 7/212

(86) Numéro de dépôt international:
**PCT/FR00/01803**

(87) Numéro de publication internationale:
**WO 01/001515 (04.01.2001 Gazette 2001/01)**

(54) **SYSTEME COMPORTANT UN SATELLITE A ANTENNE RADIOFREQUENCE**

SATELLITENSYSTEM MIT HOCHFREQUENZANTENNE

SYSTEM COMPRISING A SATELLITE WITH RADIOFREQUENCY ANTENNA

(84) Etats contractants désignés:
**AT BE CH CY DE DK ES FI FR GB GR IE IT LI LU MC NL PT SE**

(30) Priorité: **28.06.1999 FR 9908223**
**28.01.2000 FR 0001130**

(43) Date de publication de la demande:
**24.04.2002 Bulletin 2002/17**

(73) Titulaire: **CENTRE NATIONAL D'ETUDES SPATIALES**
**75001 Paris (FR)**

(72) Inventeur: **AGUTTES, Jean-Paul**
**F-31100 Toulouse (FR)**

(74) Mandataire: **Callon de Lamarck, Jean-Robert**
**Cabinet Régimbeau**
**20, rue de Chazelles**
**75847 Paris cedex 17 (FR)**

(56) Documents cités:
**EP-A- 0 771 085      FR-A- 2 714 778**
**FR-A- 2 737 627      GB-A- 2 134 353**

**Description**

La présente invention est relative à un système comportant un satellite à antenne radiofréquence.

DOMAINE GENERAL ET ETAT DE LA TECHNIQUE

L'invention concerne de façon générale toutes les applications satellites nécessitant de grandes antennes radiofréquences (télécommunications, radionavigation, écoute, observations RF active ou passive, etc.), quelque soit l'orbite (basse ou géostationnaire) utilisée.

Il a déjà été proposé une structure de satellite dans laquelle l'antenne radio-fréquence est utilisée pour se comporter comme une lentille radioélectrique par rapport à un cornet d'émission ou de réception radio-fréquence qui est également porté par le satellite et qui est situé au nadir de ladite antenne et à une certaine distance de celle-ci.

A la réception comme à l'émission, le rôle de l'antenne y est de focaliser les signaux RF qu'elle reçoit, sur le cornet ou vers la terre.

Une telle structuré de satellite permet une forte tolérance aux déformations de l'antenne, pourvu toutefois que le faisceau d'antenne reste dans une direction proche de celle de l'illumination d'émission ou de réception du cornet ou bien que l'éloignement de la source soit grand par rapport aux dimensions de l'antenne.

On comprend qu'une telle structure de satellite est d'un intérêt très limité pour de très grandes antennes car il faut alors placer le cornet au bout d'un très grand mât.

PRESENTATION DE L'INVENTION

Un but de l'invention est de proposer un système à satellite à antenne radio-fréquence qui ne soit pas limité par la taille des antennes et qui permette une forte tolérance aux déformations.

La solution selon l'invention est un système comportant une antenne radio-fréquence placée sur une orbite autour de la terre, ainsi que des moyens illuminateurs d'émission et/ou de réception également en orbite autour de la terre situés sur au moins un satellite distinct de celui portant l'antenne, l'antenne se trouvant dans le champ d'illumination desdits moyens, caractérisé en ce que l'antenne est une antenne radiofréquence formée d'un maillage de pavés, cette antenne comportant des moyens de déphasage et/ou de retard reliés à ces pavés, les signaux reçus par les pavés transitant par les moyens de déphasage et/ou de retard avant d'être réémis sur lesdits pavés, ces moyens de déphasage et/ou de retard étant aptes à dévier les signaux radio-fréquence correspondant à un ou plusieurs canaux émis par les moyens illuminateurs pour les renvoyer vers la terre selon un ou plusieurs faisceaux et/ou à dévier les signaux radio-fréquence correspondant à un ou plusieurs faisceaux émis de la terre pour les renvoyer vers les moyens illuminateurs selon un ou plusieurs canaux.

De cette façon, les signaux sont réunis sans aucunement avoir été centralisés dans l'antenne.

L'invention concerne également un système dont les moyens illuminateurs sont portés par au moins un satellite sensiblement sur la même orbite que celui portant l'antenne.

L'antenne fonctionne comme un prisme qui dévie les signaux pour assurer un rayonnement plutôt vertical (vers la terre) à partir d'une illumination horizontale ( quand les moyens illuminateurs sont sensiblement sur la même orbite).

L'invention est avantageusement complétée par les différentes caractéristiques suivantes, prises seules ou selon toutes leurs combinaisons techniquement possibles :

- l'antenne radiofréquence est sensiblement plane, les signaux transitant d'une face à l'autre de ladite antenne et pour au moins un canal et un sens de trajet, il correspond, à une direction d'illumination selon laquelle des moyens illuminateurs émettent et/ou reçoivent des signaux vers et depuis l'antenne, un cône de visées dites d'autocompensation vers et depuis la terre définies par une incidence commune sur le plan de l'antenne, dite incidence d'autocompensation (l'incidence d'une direction étant l'angle que fait cette direction avec la normale au plan de l'antenne), les visées d'autocompensation étant telles que les déformées de l'antenne transversalement au plan général de l'antenne et les erreurs d'attitude de l'antenne autour de tout axe contenu dans ledit plan sont sensiblement sans effet sur ces mêmes signaux déviés vers ou depuis cette visée d'auto-compensation et d'effet réduit dans les directions de visée voisines ;
- chaque pavé comporte au moins une portion centrale, unique pour un canal donné et un sens de trajet, reliée par des moyens de regroupement et/ou éclatement d'une part en amont sur le trajet à au moins un point de réception des signaux et d'autre part en aval à au moins un point d'émission des signaux et des moyens pour appliquer les déphasages et ou retard entre les points d'émission et de réception afin d'assurer la déviation sont appliqués sur la portion centrale pour ce qui concerne le retard et le déphasage commun et sur les branches pour ce qui concerne le retard et ou déphasage différentiel ;

- il comporte des moyens permettant de faire varier les déphasages et/ou retards appliqués sur les différents trajets ;
- au moins une partie des moyens de liaison entre le ou les points de réception et le ou les points d'émission est commune à différents canaux et des moyens permettant de discriminer ces différents canaux sont disposés au niveau d'au moins une jonction entre une portion de trajet commun et des portions de trajets spécifiques ;
- l'antenne comporte des moyens pour translater la fréquence des signaux lors de leur déviation, pour au moins un canal et un trajet ;
- pour au moins un canal et au moins un trajet, les signaux utilisent la même fréquence avant et après l'antenne ;
- pour une direction d'illumination d'au moins un canal selon laquelle des moyens illuminateurs émettent et/ou reçoivent des signaux vers et depuis l'antenne et au moins un sens de trajet, l'incidence d'autocompensation est égale à l'incidence de la direction d'illumination ;
- pour au moins un canal et au moins un trajet, les signaux utilisent une fréquence distincte avant et après l'antenne et la fréquence de translation utilisée n'est pas issue de signaux reçus sur une des faces du pavé ;
- pour une direction d'illumination d'au moins un canal selon laquelle des moyens illuminateurs émettent et/ou reçoivent des signaux vers et depuis l'antenne et au moins un sens de trajet, le cosinus de l'incidence de la visée d'autocompensation et le cosinus de l'incidence de la direction d'illumination sont sensiblement dans le rapport des fréquences centrales du canal côté illumination et côté terre ;
- selon au moins un canal et au moins un trajet, les signaux utilisent une fréquence distincte avant et après l'antenne et la fréquence de translation est issue d'un signal de translation dit externe reçu par une face du pavé ;
- selon au moins un canal et au moins un trajet, les signaux utilisent une fréquence distincte avant et après l'antenne et la translation de fréquence résulte ou est équivalente à deux translations consécutives, dont une qui est dite externe et dont la fréquence de translation, appelée Fe, est issue d'un signal de translation externe reçu par une face du pavé et dont l'autre qui est dite interne et qui est de fréquence de translation Fi, est sans référence à un signal reçu par l'une ou l'autre des faces du pavé ;
- les moyens illuminateurs comportent une pluralité de sous-ensembles illuminateurs et différents signaux d'un même canal émis vers la pluralité des sous-ensembles illuminateurs ou issus de celle-ci se répartissent entre la terre et l'antenne selon une pluralité de faisceaux d'émission et/ou de réception dont la géométrie angulaire vue de l'antenne correspond sensiblement à la géométrie angulaire relative selon laquelle sont vus depuis l'antenne les différents sous-ensembles illuminant ce canal, cette géométrie étant le cas échéant modifiée par une anisotropie ;
- les moyens illuminateurs comportent une pluralité de sous-ensembles illuminateurs et , pour un canal donné pour lequel l'antenne met en oeuvre une translation de fréquence, les différents signaux émis vers la pluralité des sous-ensembles illuminateurs ou issus de celle-ci se répartissent selon une pluralité de faisceaux d'émission et/ou de réception vers la terre dont la géométrie angulaire vue de l'antenne correspond sensiblement à la géométrie angulaire relative selon laquelle sont vus depuis l'antenne les différents sous-ensembles illuminant ce canal, après multiplication de tous les écarts angulaires par le rapport des fréquences centrales du canal côté illuminateur et côté terre, cette géométrie étant le cas échéant modifiée par une anisotropie ;
- le signal de translation externe utilisé selon au moins un canal est émis par les moyens illuminateurs et reçu par la face de l'antenne qui est du côté de l'illumination, et dans le cas où les moyens illuminateurs sont répartis en sous-ensembles illuminateurs, le signal de translation externe est émis par un sous-ensemble appelé foyer, éventuellement limité à cette fonction ;
- pour une direction d'illumination d'au moins un canal, selon laquelle des moyens illuminateurs émettent des signaux vers l'antenne tout en émettant le signal de translation externe, le cosinus de l'incidence d'autocompensation et le cosinus de l'incidence de la direction d'illumination sont sensiblement dans le rapport $(f + F - Fe) / f$ où $f$ est la fréquence côté terre, Fe est la valeur de la translation externe, et F est la totalité de la translation de fréquence, et dans le cas où les moyens d'illumination sont répartis en sous-ensembles, l'écart d'incidence entre l'illumination considérée et le foyer est sensiblement reproduit dans l'écart entre les incidences d'autocompensation correspondant à l'illlumination et celles qui correspondraient au foyer, moyennant les termes multiplicatifs $(f+F/f)$ et $(Sin(\phi 1)/Sin(\phi 2))$ où $\phi 1$ est l'angle d'incidence d'illumination du foyer et $\phi 2$ l'angle d'incidence d'autocompensation qui en résulterait si le foyer émettait ;
- Fe et F sont de même signe, c'est à dire portent sur des changements de fréquence de même sens ;
- un signal de translation externe utilisé selon au moins un canal à la réception est reçu par la face du pavé selon laquelle se fait la réception et est émis d'un point sol appelé foyer sol ;
- un signal de translation externe utilisé selon au moins un canal à la réception est reçu par la face du pavé selon laquelle se fait la réception et est émis par au moins un satellite sensiblement sur la même orbite que l'antenne et les moyens illuminateurs, ce satellite étant disposé par rapport à l'antenne du côté opposé aux moyens illuminateurs, les moyens d'émission du signal étant appelés foyer opposé ;
- pour une direction d'illumination d'au moins un canal, selon laquelle des moyens illuminateurs reçoivent des signaux, l'angle de l'incidence d'autocompensation est sensiblement égal à $\phi 2 + (Cos(\phi 2) (f+Fe)-Cos(\phi 1) (F+f)) / Sin(\phi 2) f$ où $\phi 1$ et $\phi 2$ sont l'angle d'incidence de la direction d'illumination et celui du signal de translation externe, f la fréquence côté terre, Fe est la valeur de la translation externe, et F est la totalité de la translation de fréquence ;

- Fe et F sont de même signe, c'est à dire portent sur des changements de fréquence de même sens ;
- pour au moins un canal utilisé à l'émission et à la réception, la fréquence Fe est égale à la fréquence F pour les deux trajets et au moins un foyer sol est au voisinage d'une visée d'autocompensation d'émission correspondant à ces moyens illuminateurs ;
- pour au moins un canal utilisé à l'émission et à la réception, l'attitude dé l'antenne, ainsi que les fréquences Fi et Fe à la fois à l'émission et à la réception, sont telles que les visées d'autocompensation sont identiques sur les deux trajets en dépit du non-alignement du foyer opposé avec les moyens illuminateurs utilisés en réception, ou en dépit de l'éloignement entre le foyer sol et le centre de la zone à couvrir ;
- pour une direction d'illumination d'au moins un canal, selon laquelle des moyens illuminateurs reçoivent des signaux, la translation de fréquence Fe se fait à partir du signal externe reçu par la face d'illumination et l'incidence d'autocompensation est telle que cosinus $(\phi2)$/cosinus $(\phi1) = (f +Fe + F)/f$ où $\phi1$ et $\phi2$ sont l'angle d'incidence de la direction d'illumination et l'angle de l'incidence d'autocompensation, f étant la fréquence côté terre, Fe la valeur de la translation externe, F la totalité de la translation de fréquence ;
- Fe et F sont de signes contraires, c'est à dire que la translation externe Fe est de sens opposé à la translation totale F ;
- pour au moins un canal utilisé à la réception $| Fe| =| F |$ et $Fi=2| F|$ ;
- pour au moins un canal utilisé à l'émission et à la réception, $| Fe| =| F|$ et $Fi| =2| F|$ pour la réception et $Fe=F$ pour l'émission et les visées d'autocompensation sont sensiblement identiques sur les deux trajets ;
- pour une direction d'illumination d'au moins un canal, selon laquelle des moyens illuminateurs reçoivent des signaux, la translation Fe se fait à partir du signal externe reçu par la face d'illumination et est de même sens que la translation totale F, $F= Fe$ et en ce que l'incidence d'autocompensation est donnée par $\phi2 - \phi1 = -2 \,Ctg(\phi1)\, F/f$ où $\phi1$ et $\phi2$ sont l'angle d'incidence de la direction d'illumination et l'angle de l'incidence d'autocompensation f étant la fréquence côté terre, Fe la valeur de la translation, F la totalité de la translation de fréquence ;
- l'attitude de l'antenne est telle que l'écart angulaire entre l'ensemble des visées possibles et les visées d'autocompensation soit globalement minimisé ;
- l'attitude et la ou les fréquences de translation Fe ou Fi sont telles que l'écart angulaire entre l'ensemble des visées possibles et les visées d'auto-compensation soit globalement minimisé ;
- l'attitude et la ou les fréquences de translation Fe ou Fi sont telles que les résidus d'autocompensation soient répartis sur les deux trajets ;
- l'antenne comporte des moyens pour mettre en oeuvre des translations de fréquences différentes sur les signaux radio-fréquence émis ou reçus selon des canaux distincts ;
- les moyens de déphasage et/ou retard sont commandés de façon à maintenir inchangé l'orientation dans le repère lié à l'antenne d'un faisceau correspondant à un canal en dépit des modifications de l'orientation dans le repère lié à l'antenne de la direction d'illumination utilisée par le faisceau ;
- les moyens de déphasage et/ou retard sont commandés de façon à maintenir inchangée l'orientation dans le repère lié à l'antenne d'une direction de faisceau éventuellement virtuel correspondant à une direction d'illumination éventuellement virtuelle repérée par rapport aux directions d'illumination d'un canal ;
- la direction du faisceau, éventuellement virtuel, sur lequel porte la compensation est choisie de manière à minimiser l'écart angulaire maximal entre ce faisceau et le faisceau ou l'ensemble des faisceaux du canal et le pas, compté à la longueur d'onde de la fréquence centrale du canal côté terre, entre les points centraux utilisés par le canal est établi en fonction de cet écart angulaire maximal et du niveau tolérable des lobes de sous-réseaux accompagnant le ou les faisceaux du canal ;
- il comporte des moyens pour commander les moyens de déphasage et/ou de retard de façon à maintenir inchangée la direction dans le repère terrestre d'au moins un faisceau d'au moins un canal en dépit des modifications d'attitude de l'antenne et des modifications qui en résultent concernant l'orientation dans le repère lié à l'antenne des directions d'illuminations ;
- le satellite qui porte l'antenne et au moins un satellite portant des moyens d'illumination comportent des moyens pour déterminer l'orientation dans le repère lié à l'antenne de la direction d'illumination ;
- le satellite qui porte l'antenne et au moins un satellite portant des moyens d'illumination comportent des moyens pour déterminer l'orientation dans le repère terrestre de l'axe les joignant ;
- l'orientation de la direction d'illumination dans le repère lié à l'antenne est déterminé à partir de la connaissance de l'attitude de l'antenne et de l'orientation dans le repère terrestre de l'axe les joignant ;
- l'antenne comporte des moyens pour comparer les phases et/ou retards d'au moins un signal émis par les moyens illuminateurs et reçu en différents points de l'antenne et des moyens pour déterminer en fonction de cette comparaison l'orientation dans le repère lié à l'antenne de la direction d'arrivée du ou des signaux ;
- l'attitude en lacet et/ou tangage de l'antenne est déterminée à partir de la connaissance de l'orientation dans le repère lié à l'antenne de la direction d'arrivée du ou des signaux et de l'orientation dans le repère terrestre de cette direction d'arrivée ;

- un satellite qui porte des moyens illuminateurs comporte des moyens pour se localiser ou des moyens de réception de signaux de radiolocalisation, ainsi que des moyens pour transmettre les informations de localisation ou les signaux de radiolocalisation qu'elle reçoit au satellite qui porte l'antenne, ce dernier comportant des moyens pour déterminer en fonction notamment de ces informations l'orientation dans le repère terrestre de l'axe joignant les deux satellites ;
- la direction d'illumination virtuelle repérée est celle d'un sous-ensemble illuminateur qui émet le signal de mesure, et la mesure donne directement l'information nécessaire à la compensation ;
- des sous-ensembles illuminateurs sont sur un même satellite ;
- des sous-ensembles illuminateurs sont décalés les uns par rapport aux autres sur une orbite commune ;
- des orbites de sous-ensembles illuminateurs présentent des écarts d'éllipticité et/ou de plan d'orbite ;
- sur un retard de portion centrale transite ensemble au moins un canal et la raie de translation, ou une référence qui permet de la créer, utilisée pour baisser la fréquence du ou des canaux en aval du retard, de façon à limiter les impacts des imperfections du retard sur la phase du signal dévié ;
- une translation descendante est réalisée sur un canal ou plusieurs canaux en amont du retard de portion centrale ;
- une telle translation descendante est suivie d'une translation montante après le retard utilisant une référence n'ayant pas subie ce retard, de façon à limiter les impacts des imperfections du retard sur la phase du signal dévié ;
- le retard sur la portion centrale est commun à au moins deux canaux sur au moins un sens de trajet ;
- la translation de fréquence est réalisée, sur au moins un canal et un trajet, dans la portion centrale ;
- dans une application à la transmission de télécommunications, il comporte une pluralité de canaux, ainsi qu'une pluralité de sous-ensembles illuminateurs, la mosaique des faisceaux au sol étant constituée par le motif fin généré par l'antenne du fait de la géométrie angulaire selon laquelle les sous-ensembles illuminateurs sont vus par celle-ci, répété selon un motif large qui est généré par l'antenne du fait des différents canaux ;
- les sous-ensembles illuminateurs illuminant un même canal sont vus de l'antenne suivant une géométrie angulaire relative stable à l'exception d'une rotation sur elle-même à la période orbitale et la pluralité de directions assurée par le motif large du canal précessionne grâce aux moyens de déphasage et/ou retard autour d'une direction centrale et ce en phase avec la rotation du motif fin de façon à ce que la mosaïque d'ensemble des faisceaux garde une structure stable, mise à part une rotation sur elle-même à l'échelle orbitale ;
- l'orbite des satellites est une orbite basse et l'antenne s'étend sensiblement dans un plan qui passe par le centre de la terre, en ce qu'un décalage du plan par rapport au plan d'orbite permet l'illumination sur une face, en ce que sur l'autre face au moins un des faisceaux est dépointé pour voir la terre. ;
- les déphasages et les retards sont tels que le décalage des sous-ensembles illuminateurs se traduit par des faisceaux à empreintes au sol décalées transversalement par rapport à la trace ;
- au moins deux satellites antenne utilisent des moyens illuminateurs communs ;
- au moins deux satellites antennes sont situés d'un même côté, le long de l'orbite, des moyens illuminateurs, et sont décalés sur la même orbite ou sont décalés en ellipticité et/ou plan d'orbite ;
- au moins deux satellites antennes sont de part et d'autre des moyens illuminateurs.
- un satellite antenne porte des moyens illuminateurs destinés à un autre satellite antenne ;
- un satellite prisme porte des moyens illuminateurs destinés à un autre satellite prisme et est illuminé par des moyens illuminateurs portés par un satellite prisme ;
- l'axe normal à l'antenne est sensiblement dans le plan de l'orbite, le tangage étant tel que le cône de visée d'auto-compensation rencontre la terre selon une ligne d'auto-compensation s'étirant globalement transversalement à l'orbite et le déplacement au sol, sensiblement le long de la projection de l'orbite, de la ligne d'auto-compensation est réalisé par le déplacement du satellite et/ou par le changement du tangage de l'axe d'antenne et/ou le changement de la fréquence de translation dans le cas où celle-ci est assurée au moins par un signal interne, ces trois moyens pouvant être utilisés séparément ou en combinaison ;
- les visées sol sont réparties en fauchée le long de la ligne d'auto-compensation de sorte que les contraintes de déformation de l'antenne sont très relâchées ;
- des moyens illuminateurs reçoivent directement de la terre des signaux également reçus via l'antenne et une corrélation entre les deux voies d'arrivée des signaux réalise une discrimination de visée de la source de ces signaux fonction de l'angle que la direction d'arrivée des signaux fait avec l'axe antenne/moyens illuminateurs ;
- le déplacement au sol, sensiblement le long de la projection de l'orbite, de la zone de visée discriminée par la corrélation est réalisée par le déplacement du satellite et/ou par le changement de l'angle de discrimination ;
- l'antenne présente dans une direction une dimension plus importante que dans les autres directions, ce qui assure pour au moins un faisceau l'étroitesse de l'empreinte au sol dans une direction transversale à l'orbite ;
- une imagerie du sol selon deux composantes croisées est obtenue en combinant la corrélation et un balayage du faisceau ;
- il comporte des moyens pour réaliser les visées au sol à partir d'un balayage électronique d'un faisceau selon une commande mono-dimensionnelle et la grande dimension de l'empreinte du faisceau, qui résulte de la petite dimension de l'antenne, est le long de l'orbite et permet de recouvrir la ligne d'auto-compensation pour toutes position du faisceau, en dépit de la courbure de cette ligne et du caractère mono-dimensionnnel de la commande de balayage ;

- l'antenne est allongée le long de l'axe tangage ;
- l'antenne est allongée le long de l'axe lacet ;
- l'antenne dispose de moyens pour mesurer ou reconstituer la déformée ($\Delta$P) transversale au plan de l'antenne ;
- l'antenne comporte des moyens pour comparer les phases et/ou retards d'au moins un signal émis par les moyens illuminateurs et reçu en différents points de l'antenne et des moyens pour déterminer en fonction de cette comparaison la déformée ( $\Delta$P) transversale au plan de l'antenne ;
- pour une direction d'illumination d'au moins un canal selon laquelle des moyens illuminateurs émettent et/ou reçoivent des signaux vers et depuis l'antenne et au moins un sens de trajet, une correction de déformée est réalisée par variation du déphasage de valeur $\Delta$P (2$\Pi$ f/C) (Cos($\phi$2)-Cos($\phi$1)) au niveau d'au moins une des portions centrales, où $\phi$1 est l'angle d'incidence de l'illumination, $\phi$2 est celui de la direction visée, f est la fréquence coté terre et coté illumination, et $\Delta$P est la valeur de déformée transversale au niveau à chacune des portions centrales ;
- pour une direction d'illumination d'au moins un canal selon laquelle des moyens illuminateurs émettent et/ou reçoivent des signaux vers et depuis l'antenne et au moins un sens de trajet, une correction de déformée est réalisée par variation du déphasage de valeur $\Delta$P (2$\Pi$/C) (f2 Cos($\phi$2)- f1 Cos($\phi$1)) au niveau d'au moins une des portions centrales, où $\phi$1 est l'angle d'incidence de l'illumination, $\phi$2 est celui de la direction visée, f2 et f1 sont les fréquences coté terre et coté illumination, et $\Delta$P est la valeur de déformée transversale au niveau à chacune des portions centrales ;
- pour une direction d'illumination d'au moins un canal, selon laquelle des moyens illuminateurs émettent des signaux vers l'antenne, une correction de déformées est réalisée par variation du déphasage de $\Delta$P (2$\Pi$/C) (f Cos($\phi$2)- (f+ F) Cos($\phi$1) + Fe Cos($\phi$'1)) au niveau d'au moins une des portions centrales, où f est la fréquence côté terre, Fe est la valeur de la translation externe comptée de même signe que F si les changements de fréquence sont dans le même sens, F est la totalité de la translation de fréquence, $\phi$1 est l'angle d'incidence de l'illumination, $\phi$2 est celui de la direction visée, $\phi$'1 est celui de la direction du foyer, $\Delta$P est la valeur de déformée transversale au niveau à chacune des portions centrales ;
- pour une direction d'illumination d'au moins un canal, selon laquelle des moyens illuminateurs reçoivent des signaux, une correction de déformée est réalisée au niveau d'au moins une des portions centrales par variation du déphasage de $\Delta$P (2$\Pi$/C) (f Cos($\phi$2)- (f+ F) Cos($\phi$1) - Fe Cos($\phi$'1)), où f est la fréquence côté terre, Fe est la valeur de la translation externe comptée de même signe que F si les changements de fréquence sont dans le même sens, F est la totalité de la translation de fréquence, $\phi$1 est l'angle d'incidence de l'illumination, $\phi$2 est celui de la direction visée, $\phi$'1 est celui de la direction du foyer et $\Delta$P est la valeur de déformée transversale au niveau à chacune des portions centrales ;
- pour une direction d'illumination d'au moins un canal, selon laquelle des moyens illuminateurs reçoivent des signaux, une correction de déformée est réalisée au niveau d'au moins une des portions centrales par variation du déphasage de $\Delta$P (2$\Pi$/C) (f Cos($\phi$2) + Fe Cos($\phi$'2) - (f+ F) Cos($\phi$1)), où f est la fréquence côté terre, Fe est la valeur de la translation externe comptée de même signe que F si les changements de fréquence sont dans le même sens, F est la totalité de la translation de fréquence, $\phi$1 est l'angle d'incidence de l'illumination, $\phi$2 est celui de la direction visée, $\phi$'2 est celui de la direction du foyer sol ou du foyer opposé et $\Delta$P est la valeur de déformée transversale au niveau à chacune des portions centrales ;
- l'antenne dispose de moyens pour mesurer ou reconstituer la déformée ($\Delta$P) transversale au plan de l'antenne ;
- l'antenne comporte des moyens pour comparer les phases et/ou retards d'au moins un signal émis par les moyens illuminateurs et reçu en différents points de l'antenne et des moyens pour déterminer en fonction de cette comparaison la déformée ($\Delta$P) transversale au plan de l'antenne ;
- pour une direction d'illumination d'au moins un canal selon laquelle des moyens illuminateurs émettent et/ou reçoivent des signaux vers et depuis l'antenne et au moins un sens de trajet, une correction de déformée est réalisée par variation du déphasage de valeur $\Delta$P (2$\Pi$ f/C) (Cos($\phi$2)-Cos($\phi$1)) au niveau d'au moins une des portions centrales, où $\phi$1 est l'angle d'incidence de l'illumination, $\phi$2 est celui de la direction visée, f est la fréquence coté terre et coté illumination, et $\Delta$P est la valeur de déformée transversale au niveau à chacune des portions centrales ;
- pour une direction d'illumination d'au moins un canal selon laquelle des moyens illuminateurs émettent et/ou reçoivent des signaux vers et depuis l'antenne et au moins un sens de trajet, une correction de déformée est réalisée par variation du déphasage de valeur $\Delta$P (2$\Pi$/C) (f2 Cos($\phi$2)- f1 Cos($\phi$1)) au niveau d'au moins une des portions centrales, où $\phi$1 est l'angle d'incidence de l'illumination, $\phi$2 est celui de la direction visée, f2 et f1 sont les fréquences coté terre et coté illumination, et $\Delta$P est la valeur de déformée transversale au niveau à chacune des portions centrales ;
- pour une direction d'illumination d'au moins un canal, selon laquelle des moyens illuminateurs émettent des signaux vers l'antenne, une correction de déformées est réalisée par variation du déphasage de $\Delta P$ $(2\Pi/C)$ (f Cos($\phi$2)- (f+ F) Cos($\phi$1) + Fe Cos($\phi$'1)) au niveau d'au moins une des portions centrales, où f est la fréquence côté terre, Fe est la valeur de la translation externe comptée de même signe que F si les changements de fréquence sont dans le même sens, F est la totalité de la translation de fréquence, $\phi$1 est l'angle d'incidence de l'illumination, $\phi$2 est celui de la direction visée, $\phi$'1 est celui de la direction du foyer, $\Delta P$ est la valeur de déformée transversale au niveau à chacune des portions centrales ;

- pour une direction d'illumination d'au moins un canal, selon laquelle des moyens illuminateurs reçoivent des signaux, une correction de déformée est réalisée au niveau d'au moins une des portions centrales par variation du déphasage de $\Delta P$ $(2\Pi/C)$ (f Cos($\phi$2)- (f+ F) Cos($\phi$1) - Fe Cos($\phi$'1)), où f est la fréquence côté terre, Fe est la valeur de la translation externe comptée de même signe que F si les changements de fréquence sont dans le même sens, F est la totalité de la translation de fréquence, $\phi$1 est l'angle d'incidence de l'illumination, $\phi$2 est celui de la direction visée, $\phi$'1 est celui de la direction du foyer et $\Delta P$ est la valeur de déformée transversale au niveau à chacune des portions centrales ;

- pour une direction d'illumination d'au moins un canal, selon laquelle des moyens illuminateurs reçoivent des signaux, une correction de déformée est réalisée au niveau d'au moins une des portions centrales par variation du déphasage de $\Delta P$ $(2\Pi/C)$ (f Cos($\phi$2) + Fe Cos($\phi$'2) - (f+ F) Cos($\phi$1)), où f est la fréquence côté terre, Fe est la valeur de la translation externe comptée de même signe que F si les changements de fréquence sont dans le même sens, F est la totalité de la translation de fréquence, $\phi$1 est l'angle d'incidence de l'illumination, $\phi$2 est celui de la direction visée, $\phi$'2 est celui de la direction du foyer sol ou du foyer opposé et $\Delta P$ est la valeur de déformée transversale au niveau à chacune des portions centrales.

## PRESENTATION DES FIGURES

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique d'un système conforme à un mode de réalisation possible pour l'invention ;
- la figure 2 est une représentation synoptique des différentes fonction réalisées par les différents pavés de l'antenne ;
- la figure 3 est une représentation schématique d'une mosaïque de faisceaux qui peut être obtenue avec un système conforme à un mode de réalisation possible de l'invention ;
- les figures 4 et 5 représentent schématiquement deux géométries de prise d'image dans le cas d'une application à l'imagerie micro-ondes.

## DESCRIPTION DETAILLEE D'UN OU PLUSIEURS MODES DE REALISATION DE L'INVENTION

### 1. DESCRIPTION GENERALE

1.1 Introduction

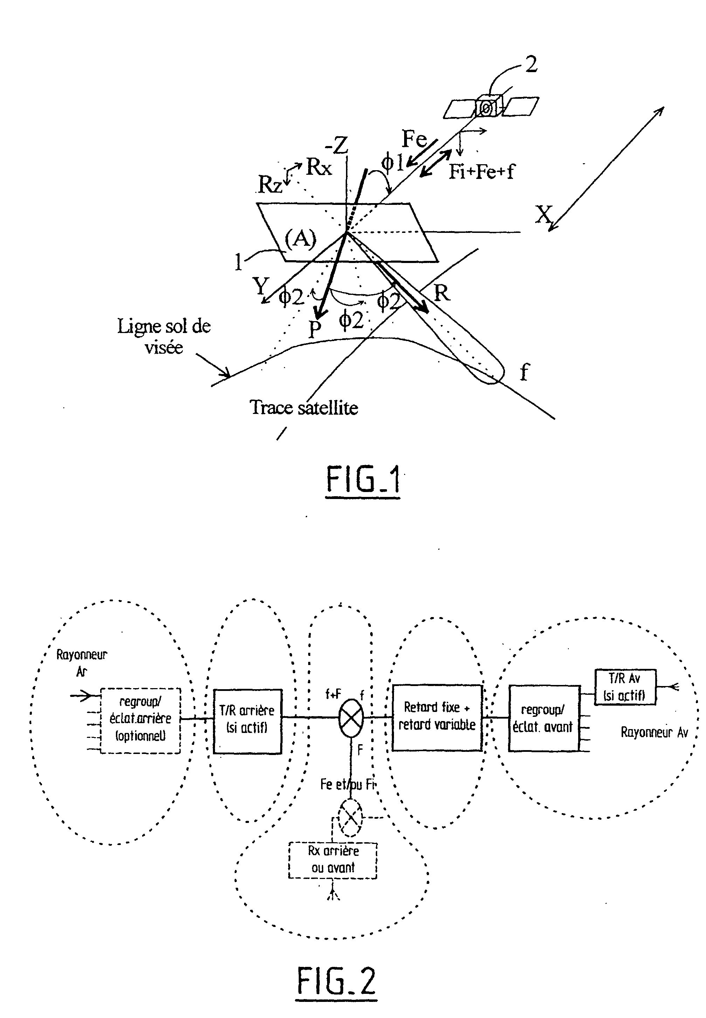

On a représenté sur la figure 1 un système comportant un premier satellite, référencé par 1 et appelé par la suite satellite prisme, ainsi qu'un deuxième satellite, référencé par 2 et appelé par la suite satellite illuminateur.
Le satellite prisme 1 porte une antenne RF, tandis que toutes les fonctions centrales de charge utile sont déportées dans le satellite 2, l'interface bord-sol de l'ensemble pouvant être assurée au travers du satellite 2.
Celui-ci est sur la même orbite que le satellite 1 et en est typiquement décalé de 100 km. A la réception comme à l'émission, l'antenne du satellite 1 dévie le signal d'illumination, l'amplifie, et le focalise dans les directions commandées par la mission.
Ladite antenne 1 est constituée par une antenne active qui en fonctionnement à l'émission ou à la réception reçoit sur une de ses faces les signaux RF et les rayonne (vers la terre ou vers le satellite 2) par son autre face.
Ainsi, cette antenne ne comporte pas de câble à travers lesquels les signaux RF seraient transmis depuis (ou vers) une plate-forme.
L'immunité aux déformations est atteinte quand l'axe moyen de visée mission et celui de l'illumination ont une incidence sur le prisme (angle par rapport à la normale à l'antenne) dont le rapport des Cosinus vérifie des conditions particulières détaillées ci-après fonction des fréquences utilisées à la mission et à l'illumination, un cas particulier étant l'identité des incidences.
Ceci permet d'accroître par 10 les tolérances de déformation macroscopique de l'antenne (exemple 10 cm en bande L au lieu de 1cm), ou d'accroître par 10 les tolérances de connaissance de cette déformation quand une correction électronique est appliquée.

On l'aura compris, une telle structure favorise le déploiement de très grandes antennes (>20 ou 50 m) en simplifiant ou supprimant les mécanismes (plus besoins de forts couples pour déplier les câbles et de contrôle précis de butée) et les raidisseurs.

La multiplication des directions d'illumination à partir de plusieurs sous-ensembles illuminateurs d'un même satellite ou de satellites distincts permet de manière transparente à l'antenne de multiplier la configuration de faisceaux que celle-ci engendre vers le sol.

Le principe peut être étendu au cas d'un illuminateur situé sur une orbite totalement différente de celle du prisme, on peut penser par exemple à un illuminateur géostationnaire d'un prisme en orbite basse. Les incidences d'illumination et de visée ne sont plus alors stables, mais la condition d'auto-compensation détaillée ci-après peut être maintenue en jouant sur les paramètres tels que la déviation, la fréquence d'illumination ou même éventuellement l'attitude physique du prisme. Par la suite de cette étude on ne considère que le cas de deux satellites sensiblement sur la même orbite.

Dans une variante où la même face assurerait la liaison vers les illuminateurs et vers le sol, l'avantage d'auto-compensation des déformées disparaît mais reste l'avantage de la disparition des câbles et de la multiplication transparente des faisceaux en présence de plusieurs sous-ensembles illuminateurs. Par la suite, on ne décrit que la configuration avec les signaux transitant entre les faces.

La description qui suit considère toujours une zone utile de travail de l'antenne située sur la terre, on peut imaginer aussi que l'antenne vise une zone située dans l'espace (par exemple à des fins d'astronomie spatiale, ou de liaison avec d'autre satellites). On peut aussi imaginer que les satellites illuminateurs et prisme sont en orbite autour d'un astre autre que la terre.

1.2 Géométrie générique

La figure 1 donne la géométrie générique, l'allure réelle diffère suivant le type de mission, Radar ou télécom, orbite basse ou géostationnaire. On notera que dans tout le présent texte, le terme Radar inclut l'ensemble de l'observation ou détection radiofréquence, passive ou active.

L'illuminateur I est nominalement situé sur l'axe -Y, le vecteur vitesse est sur Y de sens indiffèrent, le vecteur P est normal au plan de l'antenne. Le faisceau d'antenne vise le sol dans une gamme fixée par la mission (vecteur R). L'onde se propage entre l'illuminateur et le point au sol, dans un sens et/ou dans l'autre au travers de l'antenne.

Le prisme réalise une déviation simple ou combinée selon que les vecteurs R, P et AY sont coplanaires ou non. Pour une déviation simple, on a en général $\phi 2 + \phi 1$ proche de 90°.

On a également représenté un repère orthonormé AXYZ où A correspond à un point au centre de l'antenne, AY correspond à la direction de la vitesse des satellites 1 et 2, AZ étant dirigé vers le centre de la terre.

Le vecteur P est défini par un angle $\alpha$ entre AY et sa projection dans le plan AXY, ainsi que par un angle $\theta$ qui est l'angle qu'il fait avec cette projection.

La direction R de visée de l'antenne est définie quant à elle par les angles $\alpha'$ et $\theta'$.

Sur la figure 1, on a également porté les axes Px, Py et Pz qui correspondent aux axes AX, AY et AZ après rotation d'un angle $\alpha$ autour de AZ, puis rotation d'un angle $\theta$ autour de la direction Px ainsi obtenue.

On également porté les axes Rx, Ry et Rz qui correspondent aux axes AX, AY, AZ après rotation d'un angle $\alpha$ autour de AZ, puis rotation d'un angle $\theta$ autour de la direction Rx.

1.3 Translation de fréquence interne et/ou externe

Lorsque le prisme réalise une amplification, c'est à dire dans le cas général d'application du concept, le couplage parasite entre les deux faces ne doit pas ramener à l'entrée de la réception arrière le signal émis à l'avant avec un niveau plus fort que 20 dB sous le signal arrière. Un tel découplage n'est pas facile à assurer dans tous les cas. Le seul moyen de s'en affranchir radicalement est de créer dans le prisme une translation de fréquence à utiliser dans l'une et/ou l'autre des liaisons émission et réception. Par ailleurs cette translation peut être requise pour des raisons réglementaires,. la liaison arrière étant une liaison intersatellite relevant d'attributions spécifiques de fréquences. Ce dernier point doit néanmoins pouvoir être contourné car ici les niveaux d'émission et les trajets de liaison sont bien plus petits què pour une liaison intersatellite classique.

La fréquence d'illumination est F+f, f est la fréquence utilisée par la mission coté terre, F est positif ou négatif. Dans le cas générique la translation de fréquence F réalisée dans le prisme est la combinaison de deux translations dont l'une dite interne utilise un ton engendré dans l'antenne de fréquence Fi et l'autre dite externe utilise un ton de translation de fréquence Fe issu (ou dont la référence servant à la construire par multiplication est issue) de l'illuminateur, et telles que F= Fi +Fe. En présence de plusieurs. illuminateurs, un seul appelé foyer émet Fe. F et Fe sont de même signe si la translation Fe et la translation F sont de même sens. En présence de plusieurs illuminateurs, un seul appelé foyer émet Fe.

1.4 Géométrie d'auto-compensation des déformées

Une antenne réseau utilise des fonctions de retards et/ou des fonctions de déphasages bien qu'idéalement elle ne devrait utiliser que des retards. Le déphasage constitue un faux retard car variable selon les composantes fréquentielles du signal mission et modulo ($\lambda$). Quelques soient les termes utilisés dans la description qui suit, il y a une certaine latitude suivant le type d'application d'interchanger déphasages et retard, même si la déviation principale réalisée par le prisme gagne du fait de son ampleur à l'emploi du retard pur.

On considère le fonctionnement en émission vers la terre. Le cas de la réception est identique lorsque que Fe est nul car tous les dispositifs sont alors réciproques. Les particularités introduites par Fe non nul sont vues plus loin.

On modélise l'antenne par un champ de déformations (de type non-planéité) $\Delta p$ selon P autour d'un plan moyen que l'on suppose dans un premier temps normal à P, les erreurs d'attitude du plan moyen seront analysées ensuite. L'auto-compensation est atteinte quand pour tout point du prisme, sa projection dans le plan normal à R voit l'onde avec une phase inchangée, ou encore que la projection de $\Delta p$ sur R a un effet en phase identique et opposé sur des deux cotés du prisme. Pour un illuminateur unique ou confondu avec le foyer, l''effet en phase est $2\pi \, \Delta P \, Cos(\phi 1)(F+f) \, /C - 2\pi \, \Delta P \, Cos(\phi 1)Fe \, /C$ à l'illumination et $- 2\pi \, \Delta P \, Cos(\phi 2) \, f/C$ à l'émission avec $\phi 2$ et $\phi 1$ incidences de l'onde sur le prisme coté terre et coté illumination. L'auto-compensation est obtenue pour: $Cos(\phi 2)/Cos(\phi 1) = (Fi+f)/f$

La translation externe n'intervient pas dans la géométrie d'auto-compensation (nous verrons plus loin que Fe intervient par contre sur l'évolution de cette géométrie pour des illuminateurs situés en écart du foyer). Les visées vers la terre réalisant l'auto-compensation sont sur un cône d'axe normal au prisme.

La phase vue par la projection dans le plan d'onde de chaque point d'antenne ne varie pas avec la déformation mais la position de la projection dans ce plan d'onde bouge. Il y a deux translations dans le plan d'onde qui se cumulent, une liée à l'illumination en $\Delta P \, Sin(\phi 1)$ et l'autre liée à la liaison mission en $\Delta P \, Sin(\phi 2)$. La validité du principe prisme peut être affectée au-delà d'un certain gradient concernant la distribution d'amplitude et de phase dans le plan d'onde. Si cette distribution n'est apportée que par le prisme, seule compte la translation en aval (à l'illumination pour le trajet réception, à l'émission prisme pour le trajet émission) d'éclairement (tel que vue dans le plan d'onde). Nous verrons plus loin une option du dispositif permettant de corriger ces effets.

1.5 Résidu d'auto-compensation et amplitude de balayage

Pour une modification ($\delta\phi 1, \delta\phi 2$) de la géométrie, le résidu d'auto-compensation est en $\Delta P \, (-Sin(\phi 1) \, (Fi+f) \, \delta\phi 1 + Sin(\phi 2) \, \delta\phi 2 \, f)$. C'est essentiellement la deuxième composante qui compte car c'est celle qui résulte du balayage nécessaire pour la mission. La composante de balayage mission à iso-incidence n'a aucun effet sur le résidu.

On se fixe un seuil de résidu de 0,1 $\Delta P$, c'est à dire une réduction de sensibilité à la déformation d'un facteur 10. Pour Fi = 0, et une déviation simple on a $\phi 1 = \phi 2 = 45°$ et $\delta\phi 2 = +/- 10°$. Si Fi est positif, on peut accroître le balayage mission. Par exemple avec un rapport 5, on a, toujours dans le cas d'une déviation directe, $\phi 1 = 79°$, $\phi 2 = 11°$ et il n'y a plus de réelle limitation sur la gamme de balayage incidence ($>+/- 25°$). Par contre l'impact de l'erreur d'attitude du prisme sur la position de la visée d'auto-compensation est accrue si Fi est positif. En effet dans le pire cas d'une déviation simple, un erreur d'attitude modifiant de $\delta\phi$ l'incidence de la visée et de $-\delta\phi$ celle de l'illumination occasionne un résidu en $(Sin(\phi 1) \, (Fi+f) + Sin(\phi 2) \, f) \, \delta\phi$ qui pour être compensé nécessite un changement d'incidence de visée $\delta\phi 2 = - (1 + Tg(\phi 1)/ \, Tg(\phi 2) \,) \, \delta\phi$, soit un changement absolu de la visée d'auto-compensation de $Tg(\phi 1)/ \, Tg(\phi 2)) \, \delta\phi$. Pour (Fi+f)/f = 5, la sensibilité est de 26 au lieu de 1 en absence de translation interne.

La contrainte de planéité passé typiquement de $\lambda/20$ on passe à $\lambda/2$. Par exemple en bande L, la tolérance de 10 cm correspond au ventre maximal que ferait une dimension d'antenne de 20 m obtenue par 10 panneaux rigides reliés avec des mécanismes sommaires n'assurant que $0,5°$ de précision de calage. Compte tenu par ailleurs des faibles couples de déploiement en absence de câbles RF on pourrait utiliser des mécanismes à mémoire de forme. En bande P (tolérance 35cm), la planéité n'est plus jamais un problème. Mais comme on va le voir le concept permet même d'aller plus loin en supprimant toute exigence de planéité!

1.6 Correction électronique de la déformée

Si la déformée peut être connue ou mesurée, on peut alors par déphasage retrancher le résidu de compensation: $\Delta P(Cos(\phi 1)(Fi+f) - Cos(\phi 2)f)$. Dans ce cas le relâchement amené par le prisme ne porte plus que sur la précision de connaissance $\delta P$ de la déformée , l'exigence de planéité étant elle supprimée. Ce relâchement amené par le facteur $(Cos(\phi 1)(Fi+f) - Cos(\phi 2)f)$ est lié aux écarts de géométrie (gamme de balayage) comme précédemment pour le relâchement sur la planéité en absence de correction électronique. Une connaissance pouvant être envisagée à mieux que $\lambda/2$, surtout en bande L, la correction électronique permet a la fois de libérer la planéité et d'élargir la gamme de balayage. On verra plus loin que les signaux d'illumination offrent un moyen direct de mesurer les déformations avec la modeste précision requise.

La correction électronique peut aussi s'appliquer à l'effet de translation dans le plan d'onde de la loi d'éclairement, à partir des connaissance des deux composantes de translation de la loi d'éclairement: $\Delta P \sin(\phi)$et $\Delta P \sin(\phi 2)$. On ne dispose dans cette correction d'aucun relâchement par rapport au cas d'une correction électronique dans une antenne normale, mais la sensibilité des erreurs est moins grande (pour la plupart des lois d'éclairement).

1.7 Exemples de géométrie avec Fi=0

- Satellite de télécom géostationnaire. On vise généralement autour du nadir. Le vecteur P est contenu dans le plan de l'orbite et incliné de 45° par rapport à la verticale. La déviation est simple. Le facteur de relâchement sur la déformation est de 10 (balayage < +/-10°) L'illumination comme le rayonnement mission utilisent l'antenne dans un rapport 0,7 selon l'axe Y, il n'y a pas de perte d'efficacité dans l'autre direction.
- Satellite à visée latérale Radar ou télécom en orbite basse Cela est obtenu à partir du cas qui précède par une rotation roulis par exemple de 45° (balayage 35° à 55°) car le fonctionnement du prisme ne dépend pas de l'angle roulis.
- Satellite de type VOILE Radar ou télécom: Le plan du prisme est vertical (contient l'axe AZ). Pour une visée principale latérale à 45° d'incidence le vecteur P s'écarte du plan de l'orbite de 35°. La déviation est combinée. Une structure de satellite VOILE a en particulier été décrite dans la demande de brevet FR 96 03434 de la demanderesse.
- Mission à fauchée en orbite basse (Radar ou télécom). Avec P. dans le plan de l'orbite, le cône de visée d'auto-compensation rencontre la terre selon une ligne globalement transversale à la trace et permet un mode de fauchée défilante. Le relâchement de déformation est total si le faisceau peut suivre cette ligne.

1.8 Discrétisation du couplage entre faces

Les contraintes de mise en oeuvre (voir § 3) amènent à discrétiser le couplage entre faces selon un maillage de pavés. Les déformations locales au niveau du pavé ne sont pas auto-compensées. Sur des dimensions réduites on peut facilement imposer la planéité, par contre du fait de la déformation générale le plan du pavé peut s'écarter du plan moyen de l'antenne, surtout si le pavé constitue le panneau d'antenne à déployer. Ce point peut amener à avoir plusieurs pavés par panneau, même en absence de déformation interne au panneau, tout cela dépend du profile des déformations. On montre que, si l'échelle de la déformation est principalement la dimension de l'antenne (profile cuvette, cas général des effets thermo-élastiques) dans une enveloppe $\lambda/2$, un seul pavé par panneau suffit dés lors qu'il y a au moins 10 pavés sur chaque dimension.

Si on dispose de la connaissance de la déformée on connaît alors les erreurs d'alignement des pavés, on peut les corriger au niveau des déphaseurs de l'antenne réseau et admettre des profiles de déformation plus rapides sans densifier le maillage. On ne dispose toutefois pour ces corrections locales d'aucun relâchement sur la précision de connaissance. Par contre si la connaissance s'appuie (avec ou sans mesure) sur un modèle de déformation, la précision locale est en général meilleure.

2. <u>FONCTIONNEMENT EN PRESENCE DE DISPERSIONS (ATTITUDE, ILLUMINATEURS DECALES OU MULTIPLES, ERREURS DE FREQUENCES..)</u>

2.1 Modélisation du satellite prisme 1 pour de petits écarts géométriques

Ce qui suit a pour but d'analyser le fonctionnement du satellite prisme 1 en présence de petits écarts angulaires d'attitude du satellite prisme 1 ou de position de l'illuminateurs et les effets en terme d'écart de visée par rapport à une visée de référence R.

- Appelons respectivement face équivalente arrière et avant du satellite prisme 1 les projection du satellite prisme 1 sur les plans orthogonaux à AY et à R. Ces deux transformations depuis la face réelle ne conservent en général ni les longueurs, ni les angles. Dans le cas d'une déviation simple, une génératrice du satellite prisme 1 orthogonale au plan (AY,P,R) reste orthogonale sans changement de longueur, une autre génératrice orthogonale à la première reste orthogonale mais il y a un rapport $\cos(\phi 1)/\cos(\phi 2)$ entre la projection avant et la projection arrière.

Le rôle fondamental du satellite prisme 1 peut être décomposé ainsi, quelque soit l'ordre des opérations:

- Translation Fi avec la même phase en tout les points de l'une ou bien de l'autre des faces équivalentes. Ce qui revient à l'appliquer sur la surface réelle selon une loi de retard en plan incliné,
- Translation Fe au niveau de la face équivalente ou réelle arrière avec la phase suivant laquelle le signal de translation est reçu sur cette face équivalente ou réelle arrière,
- Liaison entre les points en correspondance des faces équivalentes arrière et avant par un retard fixe constant pour le prisme.

Quand l'illuminateur est bien sur l'axe Y, l'incidence de l'onde est nulle et le retard d'onde est constant sur toute la surface de chacune des faces équivalentes.

2.2 Ecart d'illuminateur

En absence de translation de fréquence, un écart d'illuminateur correspond à une incidence $\delta_l$ sur la face équivalente arrière et entraîne une rampe de phase avec une pente en $\delta_l$ f (pour de faibles valeurs $\delta_l$). Cette rampe est reproduite sur la face équivalente avant, son orientation et sa longueur sont transformées selon la relation de projection. entre faces équivalentes. La pente de la rampe et donc l'incidence créée en face équivalente avant sont reproduites dans de rapport des longueurs. Dans le cas général la géométrie des écarts d'illuminateurs et de faisceaux respectivement projetés dans les faces équivalentes avant et arrière n'est pas conservée, il y a une anisotropie. Dans le cas particulier d'une déviation directe, si l'écart de l'illuminateur est dans le plan (AY,P,R), la rampe de phase est alignée dans ce plan pour toutes les faces, les écarts restent dans ce plan et sont des écarts d'incidence. De même les écarts orthogonaux le restent et sont des écarts iso-incidence. L'anisotropie porte sur une modification des écarts d'incidence seulement, par $Cos(\phi 1)/Cos(\phi 2)$.

En présence d'une translation de fréquence interne Fi seule, la rampe de phase en face équivalente arrière est en $\delta_l$ (Fi+f) et reste inchangée après passage à la fréquence f. La rampe sur la face équivalente avant est donc accrue du rapport(Fi+f/f). La translation interne modifie la fonction de transfert des écarts par le rapport (Fi+f/f).

La translation externe est sans effet sur l'illuminateur qui émet cette fréquence de translation (foyer), tout se passe comme si cet illuminateur émettait directement à Fi+f. Dans le cas d'un foyer lui même en écart, on considère le satellite prisme 1 selon un nouveau modèle avec un nouvel axe AY passant par le foyer et un nouvel axe R correspondant au faisceau qu'engendrerait un illuminateur virtuel accompagnant le foyer et donc déduit de l'ancien R par l'écart engendré par l'ancien prisme soumis à l'écart de cet illuminateur virtuel et fonctionnant à Fe = 0. Dans ce nouveau prisme avec ses nouvelles faces équivalentes, pour un illuminateur en écart du foyer, la translation externe oeuvre comme une translation interne et la fonction de transformation de l'écart est en (Fi+Fe+f)/f.

On peut conclure, dans tous les cas, que le satellite prisme 1 travaille comme une lentille dont l'illuminateur serait placé dans un repérage RxRz (voir figure 1), issu du repérage d'écart vrai XIZ par la même transformation que celle entre face équivalente arrière et avant, suivie d'une amplification/réduction des longueurs en (Fi+f)/f pour ce qui concerne l'écart du foyer au tour de AY et (F+f)/f pour ce qui concerne l'écart entre un illuminateur et le foyer.

Pour une géométrie à déviation simple et en auto-compensation avec Fi= 0 (voir exemple satellite télécom en § 1.7) on a $Cos(\phi 1)/Cos(\phi 2)=1$ et on dispose alors d'une transformation isotrope avec amplification/réduction en (Fe+f)/f. Dans le cas d'un prisme télécom, un écart selon X est reproduit au sol avec une empreinte de faisceau déplacée selon -X tandis qu'un écart selon Z donne un déplacement selon Y. L'auto-compensation obtenue avec Fi non nul, introduit l'anisotropie dans une déviation directe, car la fonction de transfert en incidence devient $(Cos(\phi 1)/Cos(\phi 2))$ $(Fi+Fe+f)/f = (Fi+Fe+f/Fi+f)$ , tandis qu'elle est (Fi+Fe+f)/f sur l'autre axe. Ce rôle. de Fi sur l'anisotropie se trouve pour tout type de prisme en auto-compensation car Fi détermine le rapport des surfaces équivalentes avant et arrière.

Un écart illuminateur $\delta\phi 1$ déplace la visée sol d'auto-compensation de $\delta\phi 2$. Si Fe =0, on a $\delta\phi 2$ tel que le résidu total $(-Sin(\phi 1)( f+Fi) \delta\phi 1 + Sin(\phi 2) f\delta\phi 2)$ soit nul. Si Fe est non nul, en considérant que le foyer n'est pas en écart au besoin en considérant un nouveau modèle de satellite prisme 1 supprimant cet écart, un autre illuminateur en écart $\delta\phi 1$ par rapport à ce foyer a une visée d'auto-compensation en écart $\delta\phi 2$ par rapport à la visée d'auto-compensation du foyer telle que $- Sin(\phi 1)( f+Fi+Fe) \delta\phi 1 + Sin(\phi 2) f\delta\phi 2)$ soit nul. De manière générale, la différence entre les incidences des visées d'auto-compensation correspondant à deux illuminations et la différence des incidences de ces deux illuminations sont dans le rapport $Sin(\phi 1)/Sin(\phi 2)$ (f+F)/ f.

2.3 Fonctionnement avec un bouquet d'illuminateur

Le prisme étant un système linéaire, plusieurs illuminateurs en écart par rapport à AY donnent plusieurs faisceaux en écart par rapport à R, de manière totalement transparente pour le prisme.

Une configuration multi-faisceaux facilement maîtrisable est celle qui résulte d'illuminateurs décalés sur l'orbite et donc vus décalés sur AZ du fait de la courbure de l'orbite. Elle confère un alignement de faisceaux le long de l'orbite dans le cas de la géométrie de satellite de télécom, un alignement de faisceaux transversal à l'orbite dans la géométrie Voile (voir exemples de géométrie en §1.7).

Comme une antenne classique, le satellite prisme 1 peut discriminer différents canaux (temporels ou fréquentiels) émis par un illuminateur et leur affecter un faisceau distinct. Pour une mission nécessitant un grand nombre de faisceaux, il est possible de combiner la fonction multi-faisceaux externe issue de la multiplicité d'illuminateurs avec la fonction multi-faisceaux interne rendue par le satellite prisme 1 à chaque illuminateur afin de faciliter la mise en place de grande mosaïque de faisceaux. Le § 4 reprend plus en détail l'application télécom en donnant aux illuminateurs la fonction de motif proche au sein d'une grande mosaïque.

2.4 Avantage apporté par la translation de fréquence

L'amplification/réduction des écarts (ou incidences sur face équivalente avant) de chacun des faisceaux, amenée par le rapport (F+f/f s'applique aussi aux écarts entre faisceaux. C'est l'ensemble du bouquet de faisceaux formé par le bouquet d'illuminateurs qui s'ouvre ou se ferme en fonction du rapport (F+f/f. La vocation première du prisme étant plutôt la basse fréquence (qui conduit à de grandes antennes) et compte tenu des fréquences élevées des liaisons intersatellite (>20 ou 40 Ghz), on voit que l'on peut obtenir des rapports d'amplification de plus de 20. Comme les contraintes de mise en oeuvre (voir § 3.1) limitent l'écart entre faisceaux cotés terre à quelques degrés, avec de tels rapports d'amplification l'écart entre illuminateurs n'est alors que de quelques 10-3 radian. Les illuminateurs peuvent ainsi faire l'objet d'un seul satellite multi-illuminateur avec des bras de 5 m maximum pour un distance au satellite prisme 1 de 5 km (pour 10-3).

Pour les cas de missions où les illuminateurs ne peuvent être rassemblés dans un même satellite, on peut avoir intérêt à utiliser la réduction d'écart (si la basse fréquence f-|F| peut se loger dans une attribution inter-satellite) afin de relâcher la contrainte sur la navigation relative des illuminateurs.

2.5 Comportement vis à vis de l'attitude du satellite prisme 1

Un changement d'attitude du satellite prisme 1 combine deux effets quant à la position au sol de l'empreinte du faisceau, l'effet induit par le mouvement de l'illuminateur dans un repère lié au satellite prisme 1 et l'effet direct du changement d'attitude du repère. D'après ce qui précède (§2.2), le mouvement induit par un illuminateur quelconque si Fe = 0 ou par le foyer dans le cas contraire est d'une amplitude dans le rapport (Fi+f/)f du mouvement direct et on constate que, pour de fortes valeurs de (Fi+f/)f, la sensibilité à l'attitude est globalement accrue. Par contre si Fi est négatif ou nul, c'est l'inverse ou équivalent.

Dans tous les cas, une erreur d'attitude roulis, n'engendre que l'effet direct, puisque l'illumination arrière de l'antenne est inchangée Si le satellite prisme 1 est en géométrie d'auto-compensation, un erreur d'attitude autour d'un axe contenu dans le plan du prisme est sans effet car est assimilable à une déformation transverse au prisme. L'évolution fonction de Fi de l'effet induit n'intervient que sur le troisième axe d'attitude orthogonal aux deux premiers, c'est à dire sur l'axe lacet dans le cas du prisme télécom, sur l'axe tangage pour le prisme VOILE.

Toujours dans le cas d'une géométrie de compensation, décomposons le vecteur d'erreur d'attitude selon une composante $\rho$ le long de l'axe roulis AY et d'une composante $\sigma$ dans le plan du prisme. La composante $\sigma$ est sans effet sur la phase des points projetés dans un plan normal à R. Par contre la translation des points dans ce plan correspond à une rotation autour de R de valeur égale à la projection de $\sigma$ sur R. Donc le vecteur d'écart $\delta R$ est le résultat d'un effet de roulis $\rho$ sur R et de rotation de cet effet autour de R de valeur $(\sigma.R)$ .

Dans le cas d'un prisme télécom à visée au nadir, pour une erreur en tangage $t$, on a $\rho = 0$ et donc aucun effet. Pour une erreur en lacet $l$, on a $|\rho|= l/Tg(\phi 1)$ et $|\sigma|= l/Sin(\phi 1)$. La rotation roulis $\rho$ est combinée avec une rotation autour de R et donc en lacet de valeur $Cos(\pi/2 -\phi 1)$ $l/Sin(\phi 1)= l$. La rotation lacet est identique à celle d'une antenne normale, s'y rajoute un roulis en $l/Tg(\phi 1)$. Pour Fi =0 le roulis est de même amplitude que le lacet. On retrouve ce même résultat en constatant qu'en tangage les deux mouvements direct et induit se compensent, en lacet le mouvement induit se transforme en roulis et se superpose au mouvement direct lacet.

2.6 Fonctionnement en réception avec Fe non nul

Tout ce qui précède s'applique aussi bien à l'émission qu'à la réception pourvu que Fe soit nul. Dans le cas contraire, le fonctionnement des écarts d'iliuminateurs est conservé mais pas l'auto-compensation. Il y a plusieurs options de modification du dispositif pour conserver équivalent en réception.

2.6.1 Translation réception avec signal foyer réception sol.

Considérons un foyer réception au sol selon une incidence $\phi 2$, $\phi 1$ étant l'incidence selon laquelle un illuminateur reçoit le signal. Considérons une visée sol d'incidence $\phi 2+ \delta\phi 2$, le résidu total de compensation est en $Cos(\phi 1)$

(F+f) - Cos($\phi$2) f - Cos($\phi$2) Fe + Sin($\phi$2)$\delta\phi$2 f. L'auto-compensation est obtenue lorsque:

$$\delta\phi2 = (Cos(\phi2)(f+Fe)- Cos(\phi1)(F+f)) / (Sin (\phi2) f),$$

ce qui définit au sol une ligne d'auto-compensation réception.

Le résidu de déformée est sensible à l'écart de visée autour de cette ligne (en Sin($\phi$2)$\delta\phi$2 f) et à l'erreur d'attitude $\delta\phi$ du prisme en (Sin($\phi$1)(F+f) $\delta\phi$ + Sin($\phi$2) (Fe+f) $\delta\phi$) dans le cas défavorable d'une déviation simple. Le premier terme est inchangé par rapport au cas de l'émission, par contre il apparaît une sensibilité supplémentaire à l'attitude en (Sin($\phi$1)Fe + Sin($\phi$2) Fe) $\delta\phi$ qui peut être pénalisante si Fe est positif et grand devant f ou devant Fi+f.

En choisissant Fi=0 et $\phi$1= $\phi$2, la ligne d'auto-compensation émission réalise aussi l'auto-compensation de réception, mais le foyer réception doit être sur cette ligne. Il est ainsi possible d'ajuster Fi et Fe pour avoir les lignes d'auto-compensation émission et réception très proches même si le foyer réception ne peut être à proximité de cette ligne.

Cette solution de foyer sol de réception est délicate à utiliser en orbite défilante sauf si Fe est petit, car la correspondance des lignes d'autocompensation ne peut être maintenue.

2.6.2 Foyer réception sur orbite en opposition de l'illuminateur.

Une position particulière du foyer réception est sur l'orbite avec un moyen illuminateur situé du coté opposé par rapport au prisme. On a alors $\phi$2 = $\phi$1 +$\gamma$ , $\gamma$ négatif et petit du à la courbure de l'orbite. D'après ce qui précède, la visée auto-compensation est obtenue pour $\delta\phi$2 = -FiCtg($\phi$1)/f - $\gamma$(f+Fe/f) et une incidence $\phi$1 + $\gamma$ + $\delta\phi$2 = $\phi$1 - (Fi Ctg ($\phi$1) +$\gamma$Fe) / f.

Puisque $\gamma$ est négatif, il est donc possible d'ajuster Fi et Fe pour que l'auto-compensation à la réception se fasse à la même incidence qu'à l'émission, c'est à dire à $\phi$1, par exemple en prenant Fi =0 à l'émission et Fi, Fe à la réception tels que FiCtg($\phi$1)+ $\gamma$Fe = 0.

L'avantage de cette solution par rapport à la précédente est qu'il n'y a pas d'effet supplémentaire de l'erreur d''attitude sur le résidu si F et Fe sont proches (Fi faible) car les effets sur $\phi$1 et $\phi$2 sont identiques alors qu'ils s'opposaient avec un foyer sol. Enfin cette solution est valable pour tout type d'orbite. Un inconvénient est qu'en absence de fréquence interne on ne peut pas faire correspondre l'auto-compensation émission avec celle de la réception et l'écart peut être grand si Fe/f est grand.

2.6.3 Utilisation à la réception du signal foyer émission de manière négative

Si maintenant, on utilise pour la réception, la fréquence de translation du foyer émission avec une translation de signe opposé, c'est à dire inverse de ce qui est nécessaire pour passer de f à f+F, en complétant ensuite avec la fréquence interne. On a alors le résidu total en:

$$Cos(\phi1)(Fi+Fe+f) + Cos(\phi1) Fe - Cos(\phi2)f = Cos(\phi1)(Fi+2Fe+f) -$$

$$Cos(\phi2) f ,$$

avec Fe et Fi de signes opposés.

Avec Fi =Fi'-2Fe = F-Fe on a la même condition d'auto-compensation que pour l'émission avec une translation interne Fi'.

Seule la composante Fi' de Fi est appliquée sur la face réelle avec une rampe de phase (ou de retard) comme pour une translation interne normale. La composante Fi'' = - 2Fe est appliquée sur la face réelle sans rampe de retard. On peut considérer que la translation est opérée sur la face équivalente arrière que l'on peut toujours définir normale à direction du foyer. Cette translation mélange un signal Fe qui a auparavant traversé orthogonalement cette face pour réfléchir sur la face réelle et revenir avec une rampe de phase due à ce double trajet, et un signal Fi'' dont la rampe de phase est due au trajet simple depuis la face réelle. Si |Fi''| = 2|Fe| les deux rampes sont de même amplitude, et se compensent puisque la translation de Fe est négative. Seule reste éventuellement la rampe de phase issue d'une incidence de signal mission f sur la face avant reproduite à l'arrière après anisotropie et amplification/réduction en f/(Fi'-Fe+f) = f/(F+f) comme pour un prisme normal.

On vérifie que les sensibilités de la visée d'auto-compensation aux écarts de l'illuminateur foyer émetteur de Fe, aux écarts de l'illuminateur par rapport au foyer, et à l'attitude du prisme sont les mêmes que celles exprimées aux § 1.5 et 2.2 dans le cas de l'émission avec translation interne Fi' et externe -Fe (c'est à dire Fe positive). De même, indépendamment de la condition géométrique d'auto-compensation, l'effet sur les faisceaux de réception des écarts d'illuminateurs et entre illuminateurs ou de l'attitude du prisme sont inchangés.

C'est la solution idéale dés lors que l'on consent à avoir une fréquence interne.

2.6.4 Translation réception avec le signal du foyer émission seul.

Avec Fi= 0 il faut alors Fe < f et la condition d'auto-compensation est $\cos(\phi1)(f +Fe)) + \cos(\phi1)Fe - \cos(\phi2)$ f = Cos $(\phi1)$ (f+2F)- Cos$(\phi2)$ f = 0. Pour F petit devant f, $\phi2-\phi1 = 2$ Ctg$(\phi1)$ F/f. Si on ne veut pas trop d'écart en les points d'auto-compensation émission et réception il faut là encore F/f petit.

2.7 Dispersions des fréquences Fi, Fe ,f

2.7.1 Variation d'écart dans la bande $\Delta F$

L'amplification/réduction de l'écart angulaire est en (F+f)/f et varie donc dans la bande $\Delta f$. L'erreur relative sur l'écart entre faisceaux est en $-\Delta f /f (F/(F+f))$. Comme l'amplitude angulaire du motif mission crée à partir de plusieurs illuminateurs est limitée à quelques degrés, cela ne pose pas de problèmes avec des bandes relatives de quelques % (et F positif).

Si on considère les deux trajets, on peut avoir une grande bande relative totale et il peut devenir nécessaire d'avoir une fréquence de translation par trajet.

2.7.2 Instabilités relatives sur Fi et Fe

Avec un seul illuminateur et Fi=0, tout se passe comme s'il n'y avait qu'une seule source de fréquence.

L'amplification/réduction de l'écart angulaire est en f1/(f1-F) ou f1 est la fréquence d'émission de l'illuminateur et F celle de la translation de fréquence. Si Fi est non nul et/ou en présence de plusieurs illuminateurs, F et f1 sont des fréquences indépendantes. L'erreur relative sur l'écart angulaire $\mu$ qui résulte des instabilités relatives des fréquences s'écrit $\delta\mu/\mu < St - ((f1 +F)/(f1-F))$ St, avec St = stabilité de fréquence relative (inclut aussi le doppler relatif). L'effet est maximal pour F>>f est vaut = 2 (F/f) St. L'erreur relative sur l'écart entre deux faisceaux quelconques est plus faible car la source d'erreur amenée par l'instabilité de la translation est commune. Avec un stabilité relative de $10^{-5}$, c'est à dire aucune précaution particulière, l'erreur angulaire absolue reste insignifiante compte tenu des faibles valeurs d'écart envisagées.

La fréquence Fi doit être appliquée à phase constante sur la face équivalente de réception (avant ou arrière), c'est à dire sur la face réelle moyennant une pente de retard en Sin $(\phi1)$ ou un pente de phase en Sin $(\phi1)$ Fi. Une pente de phase peut être plus facile à réaliser, mais établie nominalement pour la valeur théorique Fi, elle introduit une erreur de pente de phase en Sin $(\phi1)$ $\delta$Fi en cas d'erreur $\delta$Fi sur Fi. Cette erreur est compensée par un écart d'incidence $\delta\phi$ sur la face équivalente avant telle que $\delta\phi$ Cos$(\phi2)$ f= Sin $(\phi1)$ $\delta$Fi. Pour une déviation directe on a $\delta\phi$ = (Fi/f) St. Pour Fi/f = 20 (grande amplification d'écart) on $\delta\phi <20$ $10^{-5} < 10^{-2}$ degrés.

Le cas de la translation réception avec foyer émission (voir §2.6.3) est différent car Fi" est appliqué sans rampe de retard. Par contre ce cas est sensible à la différence entre |Fi"| et 2 |Fe| qui engendre une pente résiduelle de phase sur la face équivalente arrière compensée par une incidence $\delta\phi$ du faisceau de réception sur la face équivalente avant telle que Cos$(\phi2)$ f $\delta\phi$ = Cos$(\phi1)$) ((|Fi"| -2 |Fe|). Dans une géométrie d'auto-compensation Cos$(\phi1)$/Cos $(\phi2)$) = (f/(Fi'+f)) et $\delta\phi < 3$ St (|Fe|/f) (f/(Fi'+f)). Pour Fi' positif et une grande amplification d'écart (|Fe/f| >20) on a $\delta\phi < 3 10^{-2}$ degrés.

La stabilité relative peut devenir une contrainte si l'ouverture du faisceau mission est inférieure à 0,3°, soit une dimension effective d'antenne de 38 m en bande L. Cette contrainte peut être contournée en utilisant des lignes à retard pour appliquer Fi et en asservissant |Fi"| sur 2 |Fe| au niveau d'un des points de réception de Fe sur le prisme (ou au niveau de la plate-forme.

2.8 Correction électronique de la géométrie (illuminateurs et attitude) à partir des signaux d'illumination

Le satellite illuminateur 2 (dont le centre a été référencé par I sur la figure 1) et le satellite prisme 1 (dont le centre a été référencé par A sur la figure 1) peuvent s'analyser comme deux satellites évoluant dans un tube de certain diamètre. L'axe IA est susceptible de s'écarter de l'axe Y dans le repère du satellite antenne. Rien que l'éloignement des deux satellites et la courbure engendrée constituent un facteur d'écart. On considère par la suite les deux satellites à 100km l'un de l'autre et un tube de 5 km.

Les deux satellites connaissent leur position, celle du satellite 2 peut être transmise au satellite 1 par le canal de servitude qui de toute façon doit exister pour passer les ordres de commandes de l'antenne. A peut donc connaître l'écart d'orientation et supprimer l'effet induit par déphasage au niveau des points de couplage entre faces. L'erreur d'attitude de l'antenne entache légèrement cet correction de l'effet induit car celle-ci n'est pas faite dans le plan effectif de l'antenne (produit d'ordre 3 des erreurs d'attitude et écart d'illumination), mais surtout l'effet direct de l'erreur d'attitude n'est pas corrigé.

En option, on peut aussi mesurer l'attitude du prisme pour la corriger au niveau de l'ensembles des déphaseurs de l'antenne réseau . Il suffit pour cela de mesurer les différences de phases d'illumination entre deux points de réception sur l'antenne et ce pour deux 2 couples de points. Chaque couple permet de mesurer dans le repère du prisme une composante du vecteur Al. L'orientation de Al étant connue, on connaît celle du repère prisme, mis à part sa position en rotation autour du Al, c'est à dire essentiellement sa position en roulis. Le système devient alors complètement corrigé en attitude, sauf pour l'axe roulis, où tout reste comme pour un satellite classique. Dés lors que l'on dispose d'une connaissance de l'attitude, s'appuyant ou non sur les signaux d'illumination, on peut choisir indépendamment le type d'effet (attitude ou illuminateur) et l'axe de dispersion que l'on souhaite compenser ou non, ceci afin de conserver certaines fonctions de transfert ou d'auto-compensation naturelles du prisme.

La mesure des différences de phase peut se faire avec le signal mission (radar ou télécom) ou par mesure de phase sur un ton de translation externe ou un ton introduit à cet effet. Puisque l'on vise de grandes antennes (>20 m), une précision modeste (1cm) confère déjà une précision d'attitude de 3 centièmes degrés. L'inconvénient, que l'on trouve déjà si Fi non nul, est la nécessité d'acheminer un signal d'un point à l'autre de l'antenne.

Dans le cas de plusieurs illuminateurs distincts on peut compenser sur un illuminateur particulier ou sur une direction virtuelle d'illumination repérée par rapport aux illuminations réelles, tandis que la mesure d'attitude utilise le signal d'un ou de plusieurs illuminateurs. L'impact sur la géométrie de faisceaux des variations de la géométrie inter-illuminateurs n'est bien sûr pas corrigé.

2.9 Correction électronique de la déformée à partir des signaux d'illumination

La correction de la déformée $\Delta P$ (par retranchement du résidu d'auto-compensation $\Delta P(Cos(\phi1)(Fi+f) - Cos(\phi2)f))$ est faite au niveau de chaque point de couplage ou au niveau des déphaseurs du pavé d'antenne réseau associé à un même point de couplage. Dans le deuxième cas on peut interpoler entre les points de couplage. Quelque soit le moyen de mesure, on peut avoir intérêt à coupler cette mesure avec celle de l'attitude du plan moyen obtenue à partir des signaux d'illumination.

Les signaux d'illumination permettent aussi cette mesure en généralisant pour tous les points de couplage la mesure de phase envisagée pour l'attitude.

2.10 Fi ou Fe?

Fi peut être plus simple à implanter que Fe. Avec un seul illuminateur, l'intérêt d'un grand rapport (Fi+f)/f pour un prisme auto-compensé est d'accroître l'incidence d'illumination et ce faisant d'accroître la surface effective de l'antenne pour la mission, de réduire la sensibilité à la gamme de balayage, de diminuer les effets de translation dans le plan d'onde si la loi d'éclairement est faite par le prisme et non par l'illuminateur. Par contre la sensibilité à l'attitude du prisme est augmentée, aussi bien pour la direction des faisceaux que celle des visées d'auto-compensation. Fi est une bonne solution si le seul besoin est de faire une translation de valeur minimale.

Avec un bouquet d'illuminateur, Fi ne peut apporter une forte amplification ou réduction d'écart à la fois sur les deux dimensions (car Fi augmente l'anisotropie). Lorsque l'on cherche à intégrer les illuminateurs dans un même satellite une utilisation majoritaire de Fe est nécessaire.

2.11 Combinaisons avec plusieurs prismes

2.11.1 Illuminateurs communs aux deux prismes

Si les satellites prismes 1 sont situés du même coté par rapport aux satellites illuminateurs 2 le long de l'orbite, il convient de les décaler sur une même orbite, ou bien sur des orbites ayant des écarts d'ellipticité et/ou de plan d'orbite afin d'assurer à la fois la non collision et l'absence de masquage de la vue des illuminateurs. La solution de décalage sur la même orbite présente l'inconvénient de dilater ou comprimer la géométrie relative de vue des illuminateurs en raison des différences des distances, ce qui peut être préjudiciable pour les cas ou plusieurs prismes concourent à une même mission avec des faisceaux au sol identiques, en particulier dans le cas où un prisme assure l'émission vers le sol, l'autre la réception.

Il est possible de doubler le ou la combinaison de prismes en les mettant de part et d'autre sur l'orbite des mêmes illuminateurs. Pour des prismes opposés devant viser des empreintes de faisceaux identiques au sol, il est nécessaire d'inverser la fonction de transformation d'écart sur l'un des prismes, car sinon les écarts au sol sont inversés du fait de la géométrie miroir.. Ceci est obtenu en passant de F+f à f non pas par un mélange "signal arrière (F+f) - référence F " mais par un mélange" référence (2f+F) - signal arrière (F+f). Les fonctions d'auto-compensation des déformées sont conservées, l'écart est multiplié par le rapport - (F+f)/f.

2.11.2 Chaque prisme porte l'illuminateur de l'autre prisme

Certaines missions de télécommunication mettent en oeuvre en plus du double trajet mission, un double trajet de connexion vers un ou plusieurs points sol où peuvent être faits les brassages entre faisceaux missions si cela n'est pas fait à bord (dans le ou les illuminateurs dans le cas du prisme) et où peuvent se concentrer les accès avec le réseau terrestre. Dans ce cas les illuminateurs supportent la liaison double trajet de connexion au sol. Lorsque la mission utilise plusieurs prismes, une autre approche consiste à faire porter les illuminateurs d'un prisme par un autre prisme et vice versa. Les illuminateurs multiples peuvent être disposés sur le pourtour de l'antenne prisme ou encore plus facilement au dos, peu rempli comme on va le voir plus loin, quand il s'agit de prismes opposés par rapport aux illuminateurs.

2.12 Cas d'un prisme travaillant en réflexion

Tout ce qui précède pourrait s'appliquer de la même manière à un prisme travaillant en réflexion. Le fonctionnement multi-illuminateur reste le même mais sans l'inversion des écarts, par contre les déformations et les erreurs d'attitude ne sont pas compensées mais doublées.

3. <u>ANALYSE D'UNE ARCHITECTURE DE REALISATION</u>

3.1 Architecture de l'antenne et du couplage entre faces :

L'antenne prisme est un déviateur de signaux. Autour d'une déviation de base fixe, s'ajoute le balayage de faisceau nécessaire à la mission. La déviation de base doit être obtenue en principe par un retard pur (sauf cas à faible bande relative où un déphasage suffit pour l'ensemble de la déviation) introduit en chaque point entre la face arrière et la face avant. La fonction de retard a pour objet, en s'ajoutant au retard géométrique entre deux points en correspondance des faces équivalentes avant et arrière, de rendre le retard total constant pour tous les couples de points. La fonction de retard est l'opposée du retard géométrique, elle est bi-dimensionnelle pour une déviation combinée. Les valeurs de retard étant de l'ordre des dimensions de l'antenne, il est nécessaire d'échantillonner large cette fonction pour réduire le nombre de retard afin de pouvoir les introduire dans la tranche de l'antenne. Il faut donc mailler l'antenne en pavés contenant un seul point de couplage. Les déformations ne sont alors plus compensées à l'intérieur des pavés mais cela ne nuit pas à l'intérêt du concept car la planéité est surtout difficile à tenir sur de grandes dimensions (voir §1.8).

A l'intérieur d'un pavé, en allant de la face arrière à la face avant, les moyens qui constituent l'antenne réalisent les différentes fonctions suivantes, illustrées sur la figure 2: Regroupement/éclatement arrière (étape 1 sur figure 2), amplification arrière (étape 2), translation de fréquence (étape 3), retard fixe et/ou variable (étape 4), regroupement/éclatement avant ( étape 5). Ces étapes sont franchies par le signal dans les deux sens.

La partie en avant du retard est inchangée par rapport une antenne réseau actuelle (qui a aussi besoin de retards fixes et réglables mais que l'on peut laisser dans la plate-forme).

Le regroupement/éclatement n'est pas fait suivant des longueurs égales car doit reproduire la composante avant ou arrière de la fonction de retard vue dans le pavé. Comme pour toute antenne il est généralement organisé en deux étapes d'éclatement/regroupement, une pour chaque dimension de l'antenne. Ici chaque étape peut avoir une rampe de retard à suivre. Au delà d'une certaine pente, il est préférable afin de limiter la longueur des connexions, d'adopter une répartition en branches successives le long d'un tronc aligné sur la dimension assurée par l'étape plutôt qu'un éclatement/regroupement en étoile à longueurs différenciées depuis un point central. Pour une antenne active (avec amplification intégrée), le regroupement/éclatement arrière n'est pas nécessaire si l'on ne prélève le signal qu'en un seul point arrière du pavé. Comme on va le voir il faut malgré tout conserver une surface minimale mais celle-ci est suffisamment petite pour considérer que la fonction d'éclatement fait partie intégrante de l'élément rayonnant arrière. Il est alors possible de garder la face arrière disponible pour d'éventuelles protections thermiques ou raidisseurs comme cela se fait de manière générale, ou pour des cellules solaires dans le cas très particulier de la géométrie VOILE (/1/).

L'amplification /réception arrière met en jeu de très faibles niveau de puissance (voir ci-après) et peut donc se concevoir comme une modification de l'amplification/réception primaire que l'on trouve dans les antennes actives réseau standard pour relayer les signaux de ou vers la plate-forme.

On conclut que:

- Hormis la translation de fréquence, la seule différence significative par rapport à une architecture classique est l'introduction d'un retard fixe à l'intérieur du pavé. Le retard commandable dont le besoin et le dimensionnement sont inchangés (dépend de la largeur de bande et du dépointage mission autour de la déviation de base) doit être également dans le pavé ici.
- Dans le cas ou le pavé est le panneau à déployer, le retard fixe n'introduit aucune contrainte supplémentaire, au contraire il vient à la place du câble RF émission/réception reliant le panneau à la plate-forme qui fait plus de longueur totale et qui complique le déploiement.
- Le principe doit être appliqué avec discernement afin d'en tirer un bénéfice optimal. Par exemple dans le cas d'une antenne à forme allongée, on ne cherchera à compenser les déformées que sur la longueur, d'autant que cette dernière correspond généralement à l'axe de déploiement le plus affecté par les imprécisions des mécanismes.

3.2 Impact de l'échantillonnage du couplage entre faces (taille des pavés)

Le fait d'avoir échantillonné le couplage entre face peut produire sur la face avant des lois de phases avec des ruptures et des translations entre pavés, à l'origine de lobes de sous-réseaux qui parmi d'autres perturbations amènent une perte de gain d'antenne.

- Quand il n'y a ni d'écart géometrique d'illuminateur ou d'attitude, ni de déformations, il n'y pas de ruptures, car la fonction de retard à été établie l'intérieur des pavés et entre pavés pour cette configuration. Au pire, comme pour une antenne normale, apparaissent lors de forts dépointages mission des ruptures dues au fait que la fonction de retard commandable est aussi échantillonnée.
- L'écart géométrique induit en face arrière des lois de phase qui se retrouvent en face avant sous une forme échantillonnée et produisent des écarts (dans le repère antenne) de faisceaux avec des lobes de sous-réseaux. Si l'on veut limiter, pour un écart maximal de faisceau de 1°, les lobes de sous-réseaux à -18dB et les pertes de gain à 0,2 dB, il faut un échantillonnage effectif (tel que vue le long de la direction visée) de moins de 7 $\lambda_f$ (soit $7\lambda_f$ par 10 $\lambda_f$ réels pour le prisme télécom). On peut supprimer la totalité de l'effet induit en appliquant la correction électronique géométrique décrite en §2.8 qui utilise un déphaseur par points de couplage, ou un déphasage identique sur l'ensemble des déphaseurs du pavé. Il n'y a alors plus de limite à l'écart d'illuminateur ou d'attitude. Si l'attitude est connue, on peut indépendamment corriger les écarts d'attitude et d'illuminateur. La suppression de l'effet direct de l'attitude se fait par une rampe de phase qui requiert par contre l'ensemble des déphaseurs du pavé et de l'antenne afin de ne pas recréer de lobes.
- Lorsque les écarts géométriques d'attitude ou d'illuminateur sont absents ou corrigés de leurs effets induits, l'échantillonnage du couplage ne dépend que du profil de déformée autour du plan moyen, le mouvement du plan moyen étant un écart géométrique. On a vu (§1.8) que la correction électronique de déformée combinée avec une rectification des pentes locales des panneaux peut relâcher l'échantillonnage.
- En présence de plusieurs illuminateurs, on ne peut supprimer ou contrôler que l'effet induit de l'attitude et d'une seule direction d'illumination. Cette dernière peut être virtuelle, choisie de préférence au milieu du bouquet des illuminateurs. Les effets induits des écarts d'illuminateurs par rapport à cette direction corrigée traversent le prisme et contraignent l'échantillonnage. Avec un échantillonnage effectif à $7\lambda_f$, on ne pourra disposer que de +/- 1° d'ouverture de bouquet de faisceaux.

3.3 Bilan de liaison arrière, taux de remplissage arrière du pavé

Le gain réception du système que constitue le prisme et l'illuminateur est formé en deux étapes : au niveau du regroupement avant du pavé puis ensuite dans la liaison arrière au niveau de la réception illuminateur. Si $s$ est le rapport signal à bruit maximal de la mission (S/B max.) et $p$ est le nombre de pavés, S'/B' max. en sortie de regroupement pavé est au est $s/p$. La liaison arrière transporte les $p$ signaux S' et les $p$ bruits B' et rajoute un bruit B". Pour que le total des bruits B' ne soit pas affecté de plus de 0,5 dB par cette liaison il faut que pour chaque pavé on vérifie B'/B" >8/$p$. Ce qui permet de déterminer la puissance nécessaire au niveau de chaque pavé pour émettre B', celle nécessaire quand le signal est présent au maximum est $s/p$ fois plus supérieure. Si l'on considère que l'antenne de l'illuminateur fait 1m^2 de surface, que le total des pertes de réception (+ facteur de bruit) et d'émission fait 8 dB (pessimiste), que la distance fait 100 km, que la largeur de bande mission fait 300MHz, que le pavé est rempli à l'arrière sur une surface effective vue par l'iiluminateur de 1,4 $\lambda_{F+f}$ par 1,4 $\lambda_{F+f}$ (soit pour un prisme télécom, un seul élément rayonnant de surface réelle 2 $\lambda_{F+f}$ par 1,4 $\lambda_{F+f}$ rendu directif vers l'illuminateur par le couplage de plusieurs rayonneurs élémentaires) alors la puissance à émettre ne dépend pas de $\lambda_{F+f}$ et est de 0,16 $s/p^2$ W. Avec s = 25 dB et un minimum de 10 pavés, il faut donc 0,5 W par pavé. Par contre l'amplificateur devant travailler en mode linéaire, on peut prévoir un MMIC standard de 2 à 3 W.

Le signal émis par l'illuminateur doit être reçu par chacun des points de regroupement arrière avec un S/N fort de manière à garder une pureté de signal et assurer que la puissance d'émission avant de l'antenne reste consacrée au signal et non au bruit. C'est surtout la deuxième contrainte qui prime car les *p* pavés ensemble améliorent la pureté dans le rapport p. On prendra un S/N >20 dB. Ce qui, en reprenant les mêmes hypothèses que précédemment nécessite une puissance d'émission de 2 W.

Le diagramme arrière du prisme résultant des *p* liaisons élémentaires est le même que celui utilisé par la mission vers la terre aux homoteties prés résultant des angles d'aspect de l'antenne. En présence d'effets géométriques induits (attitude ou écart illuminateur) tous deux portent les même lobes de sous-réseaux liés à l'échantillonnage de la fonction de couplage. Mais les lobes de sous-réseaux arrière sont plus élevés en niveau (voire égaux au lobe principal) lorsque le pavé est peu rempli à l'arrière car ils ne sont pas modulés par le gain du pavé. Le non-remplissage arrière ne constitue pas, une difficulté énergétique mais peut amener le risque d'illumination parasite via un lobe de sous-réseaux. Les illuminations parasites à éviter pour un prisme en orbite basse sont celles d'origine terrestre. Le remplissage de pavé considéré précédemment est suffisant car il ferme le bouquet de lobes sur un demi angle de 20° autour de l'axe Y. Avec le maillage effectif de $7\lambda_f$, les premiers lobes de sous-reseaux en face avant sont distants de +/- 3° du lobe principal alors que l'ouverture d'un bouquet de faisceaux "transparents" est limitée à +/- 1°. Ce même rapport de 3 se retrouve à l'arrière entre les lobes de sous-réseaux et les directions d'illumination, si bien que les lobes de réseau mêmes forts ne gênent pas le fonctionnement avec plusieurs illuminateurs.

On conclut qu'un élément rayonnant de 1,4 $\lambda_{F+f}$ par 1,4 $\lambda_{F+f}$ (effectif) par pavé est suffisant (pas de regroupement éclatement arrière). Le taux de remplissage arrière de f/(25(F+f)) est faible, d'autant qu'en général (F+f)/f est grand.

3.4 Translation de fréquence

Dans chaque pavé le signal mission est mélangé avec un signal de translation pouvant être issu d'un signal interne ou d'un signal externe émis par l'illuminateur (ou du sol) ou encore d'une combinaison des deux. En appliquant pour le signal de translation externe le même niveau d'émission (2W) que le signal mission, le bilan de liaison arrière garantit la pureté du signal de translation en entrée du mélangeur par le biais d'une simple réception (et amplification) dans un filtre de 10 MHz (S/N de 35 dB). Si l'on peut désormais choisir une fréquence autorisée pour l'illumination mission, cela n'est pas le cas pour le signal de translation externe. Toutefois la tolérance en la matière sera encore plus défendable vu qu'il s'agit d'un ton ou raie pure. L'émission d'une référence de la translation externe sur une autre fréquence choisie plus librement est également possible, mais le mélange n'est plus direct et doit être précédé d'un changeur cohérent de fréquence. Mais dans ce cas on peut alors mettre la référence externe au voisinage de la bande d'illumination mission et ne pas avoir à dupliquer la chaîne de réception arrière.

Le mélangeur avec le signal mission peut tout aussi bien être placé après le retard du prisme, mais dans ce cas le ton de translation doit parcourir également ce retard, ce qui n'induit pas une duplication des liaisons car le ton et le signal situées à des fréquences distinctes peuvent transiter ensemble. Cette solution est même meilleure dans le cas d'un prisme à fonction multi-faisceaux car l'illumination se faisant en principe sur autant de canaux fréquentiels que de faisceaux, il est souhaitable de faire passer tout ce multiplex dans un seul couplage par pavé plutôt que d'avoir autant de couplages que de canaux. La solution présente même un deuxième avantage dans le sens où le où les tons de translation F et le signal à translater F+f voient le même effet des erreurs de ligne à retard (dilatation), et donc après translation celui ci n'est vu qu'à la fréquence f, comme dans le cas sans translation. Le déphasage et le retard étant des notions équivalentes pour un ton pur, un simple déphasage, d'ailleurs assuré par les déphaseurs existants dans le pavé, permet d'éviter de faire transiter le ton dans les retards. On peut aussi appliquer deux translations partiellement contraires de façon à systématiquement placer le retard à basse fréquence quelque soient F et f. De cette manière, une seule technologie de ligne à retard à basse fréquence permet de réaliser tout type de prisme. L'inconvénient de cette approche est décrit dans le § 2.7.2 et concerne l'effet de l'instabilité de fréquence Fi quand des déphasages remplacent les retards pour le ton Fi.

4. ILLUSTRATION EN TELECOM MULTI-FAISCEAUX GEOSTATIONNAIRE : 400 FAISCEAUX BANDE L DE 400KM DECALES OU MULTIPLES, ERREURS DE FREQUENCES..)

4.1 Réalisation de la mosaïque

Dans une mosaïque multi-faisceaux d'une mission télécom standard, généralement plusieurs faisceaux voisins utilisent plusieurs sous-bande distinctes de la bande de la mission et le motif élémentaire formé par ces faisceaux voisins est répété en réutilisation de fréquence pour former la mosaïque. Pour 4 sous-bandes, le motif élémentaire est un losange.

Le motif à réaliser par les illuminateurs doit être constitué par un nombre entier de losanges et est ensuite répété par la fonction multi-faisceaux (ou plutôt multi-bouquet ici) interne de l'antenne. Cette dernière met en oeuvre plusieurs réseaux de formation de faisceaux (BFN en anglais), c'est à dire plusieurs regroupements/éclatements avant (voir § 3.1) chacun conduisant à un faisceau spécifique quand un seul illuminateur est présent. En présence d'un bouquet d'illuminateurs, chacun de ces faisceaux spécifique est multiplié pour former un bouquet de faisceaux. Au-delà des avantages déjà signalés l'intérêt du prisme est de réduire le nombre de BFN nécessaire pour une mosaïque donnée.

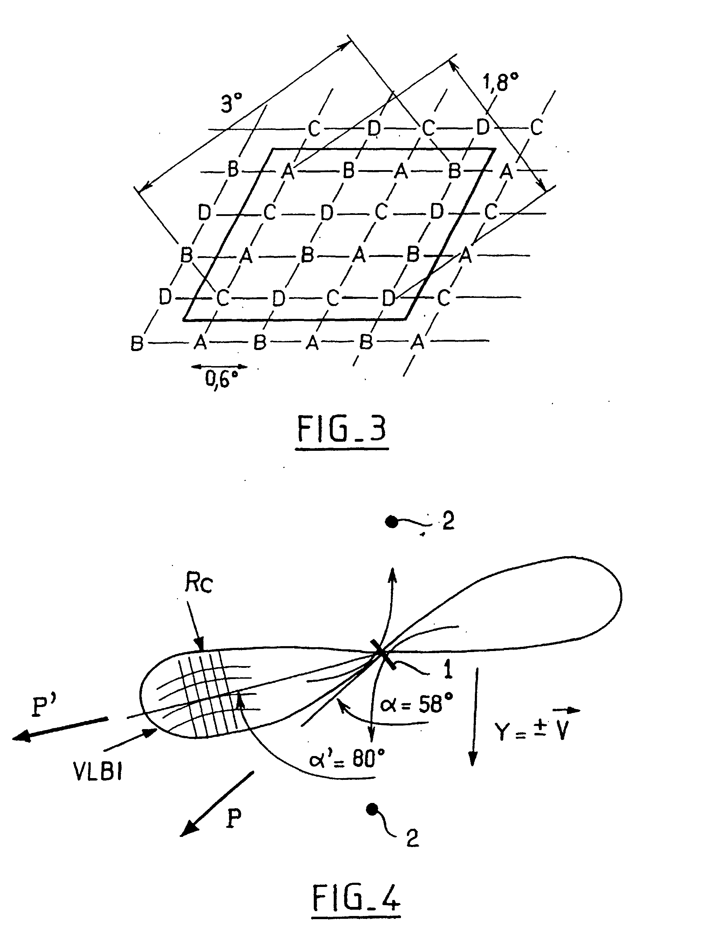

On utilise un prisme télécom en orbite géostationnaire, incliné à 45° par rapport à la direction terre et fonctionnant en translation externe. L'antenne en bande L a une dimension effective 20m (28 m réel en est-ouest) on dispose alors d'un faisceau de 0,6° d'ouverture. Un motif de 16 faisceaux, tel qu'illustré par la figure 3, nécessite un maillage réel de 6,6 $\lambda_f$ (E/O) et 7,7 $\lambda_f$ (N/S). Pour une mission couvrant toute la face terre, ce motif doit être répété environ 25 fois. 3 satellites assurent une couverture mondiale avec 3 fois 400 faisceaux de 400 km de diamètre chacun.

4.2 Architecture du prisme et de l'illuminateur

Chaque illuminateur émet 25 signaux j sur des canaux distincts que le prisme sait trier et rediriger en entrée d'un de ses 25 BFN. Si l'on choisit un multiplexage fréquentiel (parmi d'autres types de canalisation), la fonction translation de fréquence du prisme est réalisée d'emblée. Il y a des décalages de sous-bandes entre les multiplex correspondant à des faisceaux du motif devant utiliser des sous-bandes distinctes. Un seul ifluminateur émet le peigne de fréquences de translation ou la référence qui permet de le reconstituer.

A l'intérieur d'un motif, la variation de l'écart entre faisceaux due au fait que les différents illuminateurs ne travaillent pas dans la même sous-bande est faible et peut être de toute façon compensé à la construction au niveau de la géométrie inter-illuminateurs. D'un motif à l'autre les écarts internes varient car les rapports d'amplification varient (en (Fj+f)/f), le motif se dilate ou se rétracte. Ceci peut être pris en compte dans la fonction multi-faisceaux du prisme en adaptant la largeur du faisceau de façon à maintenir la juxtaposition, cette adaptation est de toute façon nécessaire pour d'autres raisons (variation de l'incidence au sol, de la taille effective de l'antenne dans la direction visée). Notons aussi que l'écart relatif angulaire est borné par $\Delta F/F$, ici peu différent de $\Delta f/f$ car $\Delta F = 25 \, \Delta f$ et $F /f = 20$. Avec un $\Delta f/f$ de quelque % l'erreur n'est que de quelques centièmes de degrés.

Le différentiel d'écart entre l'émission et la réception peut être important, comme indiqué en § 2.7 l'adoption d'un rapport constant $Fj_{\text{émission}}/Fj_{\text{réception}}$ égal au rapport $f_{\text{émission}}/f_{\text{réception}}$ règle le problème au prix ici d'un léger accroissement de l'occupation spectrale totale pour la liaison illumination qui devra être de 25 (1+ max ($f_{\text{émission}}/f_{\text{réception}}$ , $f_{\text{réception}}/f_{\text{émission}}$)) $\Delta f$ au lieu de 2*25* $\Delta f$.

Globalement cette application multi-faisceaux bénéficie du fait que l'illumination faite à très haute fréquence permet d'une part de réduire l'écart inter-illuminateur jusqu'à ne faire que seul satellite, et d'autre part de disposer, moyennant une bande relative similaire à celle de la mission, d'une largeur de bande absolue permettant l'étagement d'un grand nombre de faisceaux. Ceci est aussi en cohérence avec le fait que les bandes attribuées aux liaisons inter-satellites sont hautes et larges, même si, comme déjà signalé, la spécificité de la géométrie et des niveaux permet d'envisager de travailler dans des bandes non attribuées à cet effet.

Pour l'illustration considérée en bande L à 1,5 GHz à l'émission et 1,6 GHz à la réception avec 20 Mhz de bande, l'occupation spectrale en illumination avec 25 canaux est de 500 MHz à l'émission et de 500 Mhz la réception (ou de 530 Mhz si on veut vérifier un $Fj_{\text{émission}}/Fj_{\text{réception}}$ constant mais ceci ne semble pas nécessaire). En prenant 32,25 GHz comme fréquence centrale de l'illumination réception et 32,75 GHz pour celle de l'émission, les rapports d'amplification sont de 21,5 à l'émission et de 20,5 à la réception, ce qui n'engendre qu'une erreur maximum de 7,5 centièmes de degré sur la grande dimension +/- 1,5° du motif. Le tout rentre ainsi dans la bande attribuée 32-33 Ghz pour les liaisons intersatellite.

Le satellite illuminateur 2 dispose de 16 antennes sur une structure lacunaire reproduisant le motif dont l'envergure fait 12 mètres dans un sens et 7 mètres dans l'autre à une distance de 5 km, respectivement 2,4 m par 1,4 m si la distance peut être réduite à 1 km. La deuxième option est bien sur préférable du point de vue du satellite, la première l'étant du point de vue de la navigation car la précision de distance relative doit être de l'ordre de 5% pour ne pas créer un déplacement du faisceau extrême du motif de plus de 7 centièmes de degrés (12% de l'ouverture de l'ouverture élémentaire). On peut noter que la structure d'un satellite éloigné à 5 km n'a pas d'exigence de maîtrise dimensionnelle, une précision de 5% pour l'écart inter-illuminateur étant suffisante (soit 10 cm). Notons enfin qu'il existe d'autres bandes intersatellite encore plus hautes permettant d'augmenter encore l'amplification et de réduire l'écart inter-illuminateur.

Une telle mission offrant 400 faisceaux de 400 km d'empreinte sol et requérant une taille effective d'antenne de 20 mètres est difficilement réalisable aujourd'hui dans l'approche classique puisqu'il faudrait disposer de 400 BFN dans une grande antenne dont la maîtrise dimensionnelle serait requise à $\lambda/20$.

4.3 Cas avec satellites illuminateurs 2 distincts

D'autres applications du satellite prisme 1 peuvent conduire à des satellites illuminateurs 2 distincts. La mise en oeuvre du motif reste possible en faisant faire à chaque illuminateur une roue apparente vue du prisme. Cela est obtenu par une combinaison d'écart d'inclinaison et d'excentricité par rapport à l'orbite du prisme. Pour cette approche il est préférable de rechercher un certain éloignement (100 km) pour gagner en précision relative de navigation. Le motif tourne sur lui-même en 24 H, il est nécessaire d'accompagner ce mouvement en faisant tourner l'ensemble de la mosaïque au niveau de la fonction multi-faisceaux du prisme, ce qui peut constituer une contrainte si cette fonction n'a pas besoin d'être variable par ailleurs.

## 5. PRISME ET INTERFEROMETRIE VLBI LE LONG DE LA TRACE POUR DE L'IMAGERIE MICRO-ONDE

5.1 Introduction et principe

Il est bien connu que la taille d'antenne constitue la difficulté principale en radiométrie micro-onde passive, en particulier quand il s'agit d'imagerie de surface (hydrologie, biomasse, salinité) où il s'agit de concilier basse fréquence et bonne résolution. L'utilisation du concept de prisme se justifie déjà pour ses capacités de grande antenne, mais la géométrie deux satellites se suivant permet aussi l'emploi de la technique VLBI (interférométrie à large bande) pour obtenir la résolution dans la dimension le long de la trace (le long de la projection sol de l'orbite) et ramener ainsi la contrainte de taille d'antenne dans la seule dimension qui permet d'obtenir une résolution transversale.

Selon le principe VLBI, l'intercorrélation complexe (avec intégration et détection en I et Q) du signal reçu par le prisme avec celui reçu directement par l'illuminateur réalise une discrimination angulaire autour de la source sol des signaux fonction de l'angle $90-\beta_0$ que fait la direction d'arrivée des signaux avec l'axe prisme illuminateur.

Le module de l'intercorrélation (Racine (I^2 +Q^2)) est de la forme:

$| SINC (\pi B D (Sin(\beta)-Sin(\beta_0))/C) |$ avec

- B= largeur de bande,
- D= distance entre illuminateur et prisme
- $90-\beta_0$ = angle de la visée avec l'axe prisme illuminateur
- $\tau_0 = D Sin(\beta_0)/C$ = retard appliqué à l'une des voie de réception pour ajuster la focalisation sur $\beta_0$

La résolution angulaire est $\delta\beta= C/BD$. La résolution moyenne au sol est de 0,15 km pour D= 100 km, B = 27 MHz (allocation radiomètrie bande L), et une altitude de satellite de 1000 km.

En choisissant la gamme de valeur $\beta_0$ l'intersection du cône de mesure VLBI avec la terre crée une ligne globalement transversales à la trace. La géométrie du prisme doit être telle que sa dimension longue projetée le long de la visée soit également à forte composante transversale, conférant un faisceau dont l'empreinte est à forte composante le long de la trace croisant avec un angle important la ligne à iso-mesure VLBI..

L'imagerie le long de la trace est obtenue par le déplacement des satellites, l'imagerie transversale est obtenue par le balayage du faisceau du prisme. Lors du déplacement de satellite on peut renouveler plusieurs visées sur le même point (profondeur le long de la trace) grâce à plusieurs valeurs $\beta_0$, ceci dans un but d'accès à plusieurs incidences ou pour améliorer la résolution radiométrique.

5.2 Avec un satellite prisme 1 allongé selon l'axe tangage

Comme illustré par la figure 4, en prenant le vecteur P dans le plan de l'orbite et incliné vers la terre, le cône de visée d'auto-compensation rencontre la terre selon une ligne courbe qui coupe orthogonalement la trace du satellite. Avec un prisme allongé selon l'axe tangage, l'empreinte au sol du faisceau est allongée le long de trace. Le balayage déplace cette empreinte transversalement, l'autre dimension du prisme étant réduite, la ligne d'auto-compensation reste malgré sa courbure inscrite dans la grande dimension de l'empreinte du faisceau pour toute position de celui-ci. si la mission ne vise qu'une simple fauchée sans profondeur le long de la trace, $\beta_0$ peut être ajusté au dépointage du faisceau afin de maintenir le pixel sur la ligne d'auto-compensation et les contraintes de déformées d'antenne sont alors totalement relâchées. En limitant ce relâchement à un facteur 10, on dispose d'une gamme de +/- 10° pour faire de la profondeur par visées multiple en VLBI (qui elles s'écartent de la visée d'auto-compensation).

5.3 Avec un satellite prisme 1 de type voile (allongé sur l'axe vertical)

La configuration de prisme type VOILE est parfaitement adaptée pour une antenne. allongée selon la verticale.

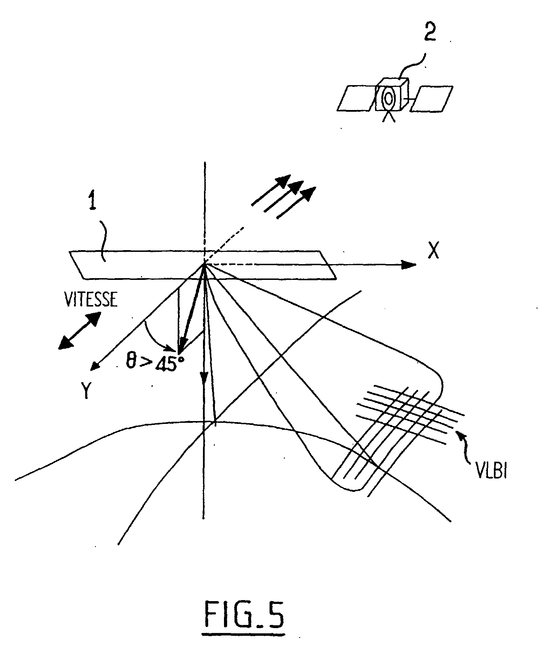

La visée de chaque coté de la trace est possible au prix d'un deuxième satellite illuminateur situé de l'autre coté par rapport au prisme le long de l'orbite et sans quasiment rien changer au niveau du prisme. La figure 5 représente la géométrie de la prise d'image, vue par un observateur situé sur l'axe vertical le long duquel est allongé le prisme.

Avec un signal de translation issu des illuminateurs ou bien une translation interne de faible valeur, un réglage de la géométrie peut être obtenu avec une gamme de visée en élévation de - 45° +/- 10° , $\alpha = 58°$ et $\alpha' = 80°$ .

Outre l'aptitude inhérente au concept VOILE pour une antenne très allongée verticalement (gradient de gravité) l'autre avantage par rapport à la configuration précédente est la tolérance au lobes de réseau qui permet de rendre l'antenne lacunaire dans sa grande dimension dans un rapport 5 (espacement 2,5 $\lambda_f$ d'éléments de taille 0,5 $\lambda_f$), aspect que l'on peut exploiter pour réaliser du multi-fréquence en mettant d'autres éléments rayonnants dans les trous. L'inconvénient de cette configuration est que le débattement en élévation qui fait la registration transverse ne se fait pas le long de la ligne d'auto-compensation et est limité à +/-10° pour conserver un relâchement de planéité d'un facteur 10. Il en résulte pour une même revisite d'une part une nécessité de voler à plus haute altitude avec un impact sur la longueur de l'antenne, d'autre part la nécessité de deux micro-satellites illuminateurs 2.

**Revendications**

1. Système comportant une antenne radio-fréquence placée sur une orbite autour de la terre, ainsi que des moyens illuminateurs d'émission et/ou de réception également en orbite autour de la terre situés sur au moins un satellite distinct de celui portant l'antenne, l'antenne se trouvant dans le champ d'illumination desdits moyens, **caractérisé en ce que** l'antenne est une antenne radiofréquence d'émission et/ou réception formée d'un maillage de pavés, cette antenne comportant des moyens de déphasage et/ou de retard reliés à ces pavés, les signaux reçus par les pavés transitant par les moyens de déphasage et/ou de retard avant d'être réémis sur lesdits pavés, ces moyens de déphasage et/ou de retard étant aptes à dévier les signaux radio-fréquence correspondant à un ou plusieurs canaux émis par les moyens illuminateurs pour les renvoyer vers la terre selon un ou plusieurs faisceaux et/ou à dévier les signaux radio-fréquence correspondant à un ou plusieurs faisceaux émis de la terre pour les renvoyer vers les moyens illuminateurs selon un ou plusieurs canaux.

2. Système selon la revendication 1, **caractérisé en ce que** les moyens illuminateurs sont portés par au moins un satellite sensiblement sur la même orbite que celui portant l'antenne.

3. Système selon l'une des revendications 1 ou 2, **caractérisé en ce que** l'antenne radiofréquence est sensiblement plane, les signaux transitant d'une face à l'autre de ladite antenne et **en ce que**, pour au moins un canal et un sens de trajet, il correspond, à une direction d'illumination selon laquelle des moyens illuminateurs émettent et/ou reçoivent des signaux vers et depuis l'antenne, un cône de visées dites d'autocompensation vers et depuis la terre définies par une incidence commune sur le plan de l'antenne, dite incidence d'autocompensation (l'incidence d'une direction étant l'angle que fait cette direction avec la normale au plan de l'antenne), les visées d'autocompensation étant telles que les déformées de l'antenne transversalement au plan général de l'antenne et les erreurs d'attitude de l'antenne autour de tout axe contenu dans ledit plan sont sensiblement sans effet sur ces mêmes signaux déviés vers ou depuis cette visée d'auto-compensation et d'effet réduit dans les directions de visée voisines.

4. Système selon l'une des revendications précédentes, **caractérisé en ce que** chaque pavé comporte au moins une portion centrale, unique pour un canal donné et un sens de trajet, reliée par des moyens de regroupement et/ou éclatement d'une part en amont sur le trajet à au moins un point de réception des signaux et d'autre part en aval à au moins un point d'émission des signaux et **en ce que** des moyens pour appliquer les déphasages et ou retard entre les points d'émission et de réception afin d'assurer la déviation sont appliqués sur la portion centrale pour ce qui concerne le retard et le déphasage commun et sur les branches pour ce qui. concerne le retard et ou déphasage différentiel.

5. Système selon la revendication 4, **caractérisé en ce qu'**il comporte des moyens permettant de faire varier les déphasages et/ou retards appliqués sur les différents trajets.

6. Système selon la revendication 4, **caractérisé en ce qu'**au moins une partie des moyens de liaison entre le ou les points de réception et le ou les points d'émission est commune à différents canaux et **en ce que** des moyens permettant de discriminer ces différents canaux sont disposés au niveau d'au moins une jonction entre une portion de trajet commun et des portions de trajets spécifiques.

7. Système selon l'une des revendications précédentes, **caractérisé en ce que** l'antenne comporte des moyens pour translater la fréquence des signaux lors de leur déviation, pour au moins un canal et un trajet.

8.  Système selon l'une des revendications précédentes, **caractérisé en ce que** pour au moins un canal et au moins un trajet, les signaux utilisent la même fréquence avant et après l'antenne.

9.  Système selon les revendications 3 et 8 prises en combinaison, **caractérisé en ce que** pour une direction d'illumination d'au moins un canal selon laquelle des moyens illuminateurs émettent et/ou reçoivent des signaux vers et depuis l'antenne et au moins un sens de trajet, l'incidence d'autocompensation est égale à l'incidence de la direction d'illumination.

10. Système selon la revendication 7, **caractérisé en ce que**, pour au moins un canal et au moins un trajet, les signaux utilisent une fréquence distincte avant et après l'antenne et **en ce que** la fréquence de translation utilisée n'est pas issue de signaux reçus sur une des faces du pavé.

11. Système selon les revendications 3 et 10 en combinaison, **caractérisé en ce que** pour une direction d'illumination d'au moins un canal selon laquelle des moyens illuminateurs émettent et/ou reçoivent des signaux vers et depuis l'antenne et au moins un sens de trajet, le cosinus de l'incidence de la visée d'autocompensation et le cosinus de l'incidence de la direction d'illumination sont sensiblement dans le rapport des fréquences centrales du canal côté illumination et côté terre.

12. Système selon la revendication 7, **caractérisé en ce que** selon au moins un canal et au moins un trajet, les signaux utilisent une fréquence distincte avant et après l'antenne et **en ce que** la fréquence de translation est issue d'un signal de translation dit externe reçu par une face du pavé.

13. Système selon la revendication 7, **caractérisé en ce que** selon au moins un canal et au moins un trajet, les signaux utilisent une fréquence distincte avant et après l'antenne et **en ce que** la translation de fréquence résulte ou est équivalente à deux translations consécutives, dont une qui est dite externe et dont la fréquence de translation, appelée Fe, est issue d'un signal de translation externe reçu par une face du pavé et dont l'autre qui est dite interne et qui est de fréquence de translation Fi, est sans référence à un signal reçu par l'une ou l'autre des faces du pavé.

14. Système selon la revendication 8, **caractérisé en ce que** les moyens illuminateurs comportent une pluralité de sous-ensembles illuminateurs et **en ce que** différents signaux d'un même canal émis vers la pluralité des sous-ensembles illuminateurs ou issus de celle-ci se répartissent entre la terre et l'antenne selon une pluralité de faisceaux d'émission et/ou de réception dont la géométrie angulaire vue de l'antenne correspond sensiblement à la géométrie angulaire relative selon laquelle sont vus depuis l'antenne les différents sous-ensembles illuminant ce canal, cette géométrie étant le cas échéant modifiée par une anisotropie.

15. Système selon la revendication 7, **caractérisé en ce que** les moyens illuminateurs comportent une pluralité de sous-ensembles illuminateurs et **en ce que**, pour un canal donné pour lequel l'antenne met en oeuvre une translation de fréquence, les différents signaux émis vers la pluralité des sous-ensembles illuminateurs ou issus de celle-ci se répartissent selon une pluralité de faisceaux d'émission et/ou de réception vers la terre dont la géométrie angulaire vue de l'antenne correspond sensiblement à la géométrie angulaire relative selon laquelle sont vus depuis l'antenne les différents sous-ensembles illuminant ce canal, après multiplication de tous les écarts angulaires par le rapport des fréquences centrales du canal côté illuminateur et côté terre, cette géométrie étant le cas échéant modifiée par une anisotropie.

16. Système selon les revendications 12 ou 13, éventuellement prises en combinaison avec la revendication 15, **caractérisé en ce que** le signal de translation externe utilisé selon au moins un canal est émis par les moyens illuminateurs et reçu par la face de l'antenne qui est du côté de l'illumination, et **en ce que** dans le cas où les moyens illuminateurs sont répartis en sous-ensembles illuminateurs le signal de translation externe est émis par un sous-ensemble appelé foyer, éventuellement limité à cette fonction.

17. Système selon les revendications 3 et 16, **caractérisé en ce que** pour une direction d'illumination d'au moins un canal, selon laquelle des moyens illuminateurs émettent des signaux vers l'antenne tout en émettant le signal de translation externe, le cosinus de l'incidence d'autocompensation et le cosinus de l'incidence de la direction d'illumination sont sensiblement dans le rapport (f + F - Fe) / f où f est la fréquence côté terre, Fe est la valeur de la translation externe, et F est la totalité de la translation de fréquence, et **en ce que** dans le cas où les moyens d'illumination sont répartis en sous-ensembles, l'écart d'incidence entre l'illumination considérée et le foyer est sensiblement reproduit dans l'écart entre les incidences d'autocompensation correspondant à l'illlumination et celles qui correspondraient au foyer, moyennant les termes multiplicatifs (f+F/f) et (Sin($\phi$1)/Sin($\phi$2)) où $\phi$1 est l'angle d'incidence d'illumination du foyer et $\phi$2 l'angle d'incidence d'autocompensation qui en résulterait si le foyer émettait.

18. Système selon la revendication 17, **caractérisé en ce que** Fe et F sont de même signe, c'est à dire portent sur des changements de fréquence de même sens.

19. Système selon l'une des revendications 12 ou 13, **caractérisé en ce qu'**un signal de translation externe utilisé selon au moins un canal à la réception est reçu par la face du pavé selon laquelle se fait la réception et est émis d'un point sol appelé foyer sol.

20. Système selon l'une des revendications 12 ou 13, **caractérisé en ce qu'**un signal de translation externe utilisé selon au moins un canal à la réception est reçu par la face du pavé selon laquelle se fait la réception et est émis par au moins un satellite sensiblement sur la même orbite que l'antenne et les moyens illuminateurs, ce satellite étant disposé par rapport à l'antenne du côté opposé aux moyens illuminateurs, les moyens d'émission du signal étant appelés foyer opposé.

21. Système selon la revendication 3 prise en combinaison avec l'une des revendications 19 ou 20, **caractérisé en ce que** pour une direction d'illumination d'au moins un canal, selon laquelle des moyens illuminateurs reçoivent des signaux, l'angle de l'incidence d'autocompensation est sensiblement égal à $\phi$2 + (Cos($\phi$2) (f+Fe)-Cos($\phi$1) (F+f)) / Sin($\phi$2) f où $\phi$1 et $\phi$2 sont l'angle d'incidence de la direction d'illumination et celui du signal de translation externe, f la fréquence côté terre, Fe est la valeur de la translation externe, et F est la totalité de la translation de fréquence,

22. Système selon la revendication 21, **caractérisé en ce que** Fe et F sont de même signe, c'est à dire portent sur des changements de fréquence de même sens.

23. Système selon les revendications 12, 18, 19 et 22 prises en combinaison, **caractérisé en ce que** pour au moins un canal utilisé à l'émission et à la réception, la fréquence Fe est égale à la fréquence F pour les deux trajets et au moins un foyer sol est au voisinage d'une visée d'autocompensation d'émission correspondant à ces moyens illuminateurs.

24. Système selon les revendications 18 et 22 prises en combinaison avec l'un des revendications 19 ou 20, **caractérisé en ce que** pour au moins un canal utilisé à l'émission et à la réception, l'attitude de l'antenne, ainsi que les fréquences Fi et Fe à la fois à l'émission et à la réception, sont telles que les visées d'autocompensation sont identiques sur les deux trajets en dépit du non-alignement du foyer opposé avec les moyens illuminateurs utilisés en réception, ou en dépit de l'éloignement entre le foyer sol et le centre de la zone à couvrir.

25. Système selon les revendications 3 et 16 en combinaison, **caractérisé en ce que** pour une direction d'illumination d'au moins un canal, selon laquelle des moyens illuminateurs reçoivent des signaux, la translation de fréquence Fe se fait à partir du signal externe reçu par la face d'illumination et l'incidence d'autocompensation est telle que cosinus ($\phi$2)/cosinus ($\phi$1) = (f +Fe + F)/f où $\phi$1 et $\phi$2 sont l'angle d'incidence de la direction d'illumination et l'angle de l'incidence d'autocompensation, f étant la fréquence côté terre, Fe la valeur de la translation externe, F la totalité de la translation de fréquence.

26. Système selon la revendication 25, **caractérisé en ce que** Fe et F sont de signes contraires, c'est à dire que la translation externe Fe est de sens opposé à la translation totale F.

27. Système selon la revendication 26, **caractérisé en ce que** pour au moins un canal utilisé à la réception | Fe| =| F| et Fi=2| F|.

28. Système selon les revendications 18 et 26 en combinaison, **caractérisé en ce que**, pour au moins un canal utilisé à l'émission et à la réception, | Fe| =| F| et Fi| =2| F| pour la réception et Fe=F pour l'émission et **en ce que** les visées d'autocompensation sont sensiblement identiques sur les deux trajets.

29. Système selon les revendications 3 et 16 prises en combinaison, **caractérisé en ce que** pour une direction d'illumination d'au moins un canal, selon laquelle des moyens illuminateurs reçoivent des signaux, la translation Fe se fait à partir du signal externe reçu par la face d'illumination et est de même sens que la translation totale F, **en ce que** F= Fe et **en ce que** l'incidence d'autocompensation est donnée par $\phi 2 - \phi 1 = -2$ Ctg$(\phi 1)$ F/f où $\phi 1$ et $\phi 2$ sont l'angle d'incidence de la direction d'illumination et l'angle de l'incidence d'autocompensation f étant la fréquence côté terre, Fe la valeur de la translation, F la totalité de la translation de fréquence.

30. Système selon la revendication 3, **caractérisé en ce que** l'attitude de l'antenne est telle que l'écart angulaire entre l'ensemble des visées possibles et les visées d'auto-compensation soit globalement minimisé.

31. Système selon la revendication 3 prise en combinaison avec l'une des revendications 12 ou 13, **caractérisé en ce que** l'attitude et la ou les fréquences de translation Fe ou Fi sont telles que l'écart angulaire entre l'ensemble des visées possibles et les visées d'auto-compensation soit globalement minimisé.

32. Système selon les revendications 3 prise en combinaison avec l'une des revendications 12 ou 13, **caractérisé en ce que** l'attitude et la ou les fréquences de translation Fe ou Fi sont telles que les résidus d'autocompensation soient répartis sur les deux trajets.

33. Système selon la revendication 7, **caractérisé en ce que** l'antenne comporte des moyens pour mettre en oeuvre des translations de fréquences différentes sur les signaux radio-fréquence émis ou reçus selon des canaux distincts.

34. Système selon les revendications 1 et 5 prises en combinaison, **caractérisé en ce que** les moyens de déphasage et/ou retard sont commandés de façon à maintenir inchangé l'orientation dans le repère lié à l'antenne d'un faisceau correspondant à un canal en dépit des modifications de l'orientation dans le repère lié à l'antenne de la direction d'illumination utilisée par le faisceau.

35. Système selon la revendication 34 prise en combinaison avec l'une des revendications 14 ou 15, **caractérisé en ce que** les moyens de déphasage et/ou retard sont commandés de façon à maintenir inchangée l'orientation dans le repère lié à l'antenne d'une direction de faisceau éventuellement virtuel correspondant à une direction d'illumination éventuellement virtuelle repérée par rapport aux directions d'illumination d'un canal.

36. Système selon la revendication 35 prise en combinaison avec la revendication 4, **caractérisé en ce que** la direction du faisceau, éventuellement virtuel, sur lequel porte la compensation est choisie de manière à minimiser l'écart angulaire maximal entre ce faisceau et le faisceau ou l'ensemble des faisceaux du canal et **en ce que** le pas, compté à la longueur d'onde de la fréquence centrale du canal côté terre, entre les points centraux utilisés par le canal est établi en fonction de cet écart angulaire maximal et du niveau tolérable des lobes de sous-réseaux accompagnant le ou les faisceaux du canal.

37. Système selon la revendication 34, **caractérisé en ce qu'**il comporte des moyens pour commander les moyens de déphasage et/ou de retard de façon à maintenir inchangée la direction dans le repère terrestre d'au moins un faisceau d'au moins un canal en dépit des modifications d'attitude de l'antenne et des modifications qui en résultent concernant l'orientation dans le repère lié à l'antenne des directions d'illuminations.

38. Système selon la revendication 34, **caractérisé en ce que** le satellite qui porte l'antenne et au moins un satellite portant des moyens d'illumination comportent des moyens pour déterminer l'orientation dans le repère lié à l'antenne de la direction d'illumination.

39. Système selon la revendication 34, **caractérisé en ce que** le satellite qui porte l'antenne et au moins un satellite portant des moyens d'illumination comportent des moyens pour déterminer l'orientation dans le repère terrestre de l'axe les joignant.

40. Système selon les revendications 38 et 39 prises en combinaison, **caractérisé en ce que** l'orientation de la direction d'illumination dans le repère lié à l'antenne est déterminé à partir de la connaissance de l'attitude de l'antenne et de l'orientation dans le repère terrestre de l'axe les joignant.

41. Système selon la revendication 38, **caractérisé en ce que** l'antenne comporte des moyens pour comparer les phases et/ou retards d'au moins un signal émis par les moyens illuminateurs et reçu en différents points de l'antenne et des moyens pour déterminer en fonction de cette comparaison l'orientation dans le repère lié à l'antenne de la direction d'arrivée du ou des signaux.

**42.** Système selon les revendications 39 et 41 prises en combinaison, **caractérisé en ce que** l'attitude en lacet et/ou tangage de l'antenne est déterminée à partir de la connaissance de l'orientation dans le repère lié à l'antenne de la direction d'arrivée du ou des signaux et de l'orientation dans le repère terrestre de cette direction d'arrivée.

**43.** Système selon la revendication 39, **caractérisé en ce qu'**un satellite qui porte des moyens illuminateurs comporte des moyens pour se localiser ou des moyens de réception de signaux de radiolocalisation, ainsi que des moyens pour transmettre les informations de localisation ou les signaux de radiolocalisation qu'elle reçoit au satellite qui porte l'antenne, ce dernier comportant des moyens pour déterminer en fonction notamment de ces informations l'orientation dans le repère terrestre de l'axe joignant les deux satellites.

**44.** Système selon les revendications 35 et 41 prises en combinaison, **caractérisé en ce que** la direction d'illumination virtuelle repérée est celle d'un sous-ensemble illuminateur qui émet le signal de mesure, et **en ce que** la mesuré donne directement l'information nécessaire à la compensation.

**45.** Système selon la revendication 15, **caractérisé en ce que** des sous-ensembles illuminateurs sont sur un même satellite.

**46.** Système selon l'une des revendications 14 ou 15, **caractérisé en ce que** des sous-ensembles illuminateurs sont décalés les uns par rapport aux autres sur une orbite commune.

**47.** Système selon l'une des revendications 14 ou 15, **caractérisé en ce que** des orbites de sous-ensembles illuminateurs présentent des écarts d'éllipticité et/ou de plan d'orbite.

**48.** Système selon la revendication 7, **caractérisé en ce que** sur un retard de portion centrale transite ensemble au moins un canal et la raie de translation, ou une référence qui permet de la créer, utilisée pour baisser la fréquence du ou des canaux en aval du retard, de façon à limiter les impacts des imperfections du retard sur la phase du signal dévié.

**49.** Système selon la revendication 7, **caractérisé en ce qu'**une translation descendante est réalisée sur un canal ou plusieurs canaux en amont du retard de portion centrale.

**50.** Système selon la revendication 49, **caractérisé en ce qu'**une telle translation descendante est suivie d'une translation montante après le retard utilisant une référence n'ayant pas subie ce retard, de façon à limiter les impacts des imperfections du retard sur la phase du signal dévié.

**51.** Système selon la revendication 6, **caractérisé en ce que** le retard sur la portion centrale est commun à au moins deux canaux sur au moins un sens de trajet.

**52.** Système selon les revendications 6 et 7, **caractérisé en ce que** la translation de fréquence est réalisée, sur au moins un canal et un trajet, dans la portion centrale.

**53.** Système selon l'une des revendications 14 ou 15, **caractérisé en ce que**, dans une application à la transmission de télécommunications, il comporte une pluralité de canaux, ainsi qu'une pluralité de sous-ensembles illuminateurs, la mosaïque des faisceaux au sol étant constituée par le motif fin généré par l'antenne du fait de la géométrie angulaire selon laquelle les sous-ensembles illuminateurs sont vus par celle-ci, répété selon un motif large qui est généré par l'antenne du fait des différents canaux.

**54.** Système selon les revendications 53 et 47, **caractérisé en ce que** les sous-ensembles illuminateurs illuminant un même canal sont vus de l'antenne suivant une géométrie angulaire relative stable à l'exception d'une rotation sur elle-même à la période orbitale et **en ce que** la pluralité de directions assurée par le motif large du canal précessionne grâce aux moyens de déphasage et/ou retard autour d'une direction centrale et ce en phase avec la rotation du motif fin de façon à ce que la mosaïque d'ensemble des faisceaux garde une structure stable, mise à part une rotation sur elle-même à l'échelle orbitale.

**55.** Système selon la revendication 2, **caractérisé en ce que** l'orbite des satellites est une orbite basse et **en ce que** l'antenne s'étend sensiblement dans un plan qui passe par le centre de la terre, **en ce qu'**un décalage du plan par rapport au plan d'orbite permet l'illumination sur une face, **en ce que** sur l'autre face au moins un des faisceaux est dépointé pour voir la terre.

**56.** Système selon la revendications 55 prise en combinaison avec la revendication 46, **caractérisé en ce que** les déphasages et les retards sont tels que le décalage des sous-ensembles illuminateurs se traduit par des faisceaux à empreintes au sol décalées transversalement par rapport à la trace.

**57.** Système selon la revendication 2, **caractérisé en ce qu'**au moins deux satellites antenne utilisent des moyens illuminateurs communs.

**58.** Système selon la revendication 57, **caractérisé en ce qu'**au moins deux satellites antennes sont situés d'un même côté, le long de l'orbite, des moyens illuminateurs, et **en ce qu'**ils sont décalés sur la même orbite ou sont décalés en ellipticité et/ou plan d'orbite.

**59.** Système selon la revendication 57, **caractérisé en ce qu'**au moins deux satellites antennes sont de part et d'autre des moyens illuminateurs.

**60.** Système selon l'une des revendications 57 à 59, **caractérisé en ce qu'**un satellite antenne porte des moyens illuminateurs destinés à un autre satellite antenne.

**61.** Système selon la revendication 60, **caractérisé en ce qu'**un satellite prisme porte des moyens illuminateurs destinés à un autre satellite prisme et est illuminé par des moyens illuminateurs portés par un satellite prisme.

**62.** Système selon les revendications 2 et 3, **caractérisé en ce que** l'axe normal à l'antenne est sensiblement dans le plan de l'orbite, le tangage étant tel que le cône de visée d'auto-compensation rencontre la terre selon une ligne d'auto-compensation s'étirant globalement transversalement à l'orbite et **en ce que** le déplacement au sol, sensiblement le long de la projection de l'orbite, de la ligne d'auto-compensation est réalisé par le déplacement du satellite et/ou par le changement du tangage de l'axe d'antenne et/ou le changement de la fréquence de translation dans le cas où celle-ci est assurée au moins par un signal interne, ces trois moyens pouvant être utilisés séparément ou en combinaison.

**63.** Système selon la revendication 62, **caractérisé en ce que** le les visées sol sont réparties en fauchée le long de la ligne d'auto-compensation de sorte que les contraintes de déformation de l'antenne sont très relâchées.

**64.** Système selon la revendication 2, **caractérisé en ce que** des moyens illuminateurs reçoivent directement de la terre des signaux également reçus via l'antenne et **en ce qu'**une corrélation entre les deux voies d'arrivée des signaux réalise une discrimination de visée de la source de ces signaux fonction de l'angle que la direction d'arrivée des signaux fait avec l'axe antenne/moyens illuminateurs.

**65.** Système selon la revendication 64, **caractérisé en ce que** le déplacement au sol, sensiblement le long de la projection de l'orbite, de la zone de visée discriminée par la corrélation est réalisée par le déplacement du satellite et/ou par le changement de l'angle de discrimination.

**66.** Système selon la revendication 65, **caractérisé en ce que** l'antenne présente dans une direction une dimension plus importante que dans les autres directions, ce qui assure pour au moins un faisceau l'étroitesse de l'empreinte au sol dans une direction transversale à l'orbite.

**67.** Système selon les revendications 65 et 66 prises en combinaison, **caractérisé en ce qu'**une imagerie du sol selon deux composantes croisées est obtenue en combinant la corrélation et un balayage du faisceau.

**68.** Système selon les revendications 63 et 67 prises en combinaison, **caractérisé en ce qu'**il comporte des moyens pour réaliser les visées au sol à partir d'un balayage électronique d'un faisceau selon une commande monodimensionnelle et **en ce que** la grande dimension de l'empreinte du faisceau, qui résulte de la petite dimension de l'antenne, est le long de l'orbite et permet de recouvrir la ligne d'auto-compensation pour toutes position du faisceau, en dépit de la courbure de cette ligne et du caractère mono-dimensionnnel de la commande de balayage.

**69.** Système selon la revendication 68, **caractérisé en ce que** l'antenne est allongée le long de l'axe tangage.

**70.** Système selon les revendications 67 et 55 prises en combinaison, **caractérisé en ce que** l'antenne est allongée le long de l'axe lacet.

**71.** Système selon l'une des revendications précédentes **caractérisé en ce que** l'antenne dispose de moyens pour mesurer ou reconstituer la déformée ($\Delta$P) transversale au plan de l'antenne.

**72.** Système selon la revendication 71, **caractérisé en ce que** l'antenne comporte des moyens pour comparer les phases et/ou retards d'au moins un signal émis par les moyens illuminateurs et reçu en différents points de l'antenne et des moyens pour déterminer en fonction de cette comparaison la déformée ($\Delta$P) transversale au plan de l'antenne.

**73.** Système selon les revendications 3, 5, 8 et 71, **caractérisé en ce que** pour une direction d'illumination d'au moins un canal selon laquelle des moyens illuminateurs émettent et/ou reçoivent des signaux vers et depuis l'antenne et au moins un sens de trajet, une correction de déformée est réalisée par variation du déphasage de valeur $\Delta$P (2$\Pi$ f/C) (Cos($\phi$2)-Cos($\phi$1)) au niveau d'au moins une des portions centrales, où $\phi$1 est l'angle d'incidence de l'illumination, $\phi$2 est celui de la direction visée, f est la fréquence coté terre et coté illumination, et $\Delta$P est la valeur de déformée transversale au niveau à chacune des portions centrales.

**74.** Système selon les revendications 3, 5, 10 et 71, **caractérisé en ce que** pour une direction d'illumination d'au moins un canal selon laquelle des moyens illuminateurs émettent et/ou reçoivent des signaux vers et depuis l'antenne et au moins un sens de trajet, une correction de déformée est réalisée par variation du déphasage de valeur $\Delta$P (2$\Pi$/C) (f2 Cos($\phi$2)- f1 Cos($\phi$1)) au niveau d'au moins une des portions centrales, où $\phi$1 est l'angle d'incidence de l'illumination, $\phi$2 est celui de la direction visée, f2 et f1 sont les fréquences coté terre et coté illumination, et $\Delta$P est la valeur de déformée transversale au niveau à chacune des portions centrales.

**75.** Système selon les revendications 3, 5, 16 et 71, **caractérisé en ce que** pour une direction d'illumination d'au moins un canal, selon laquelle des moyens illuminateurs émettent des signaux vers l'antenne, une correction de déformées est réalisée par variation du déphasage de $\Delta$P (2$\Pi$/C) (f Cos($\phi$2)- (f+ F) Cos($\phi$1) + Fe Cos($\phi$'1)) au niveau d'au moins une des portions centrales, où f est la fréquence côté terre, Fe est la valeur de la translation externe comptée de même signe que F si les changements de fréquence sont dans le même sens, F est la totalité de la translation de fréquence, $\phi$1 est l'angle d'incidence de l'illumination, $\phi$2 est celui de la direction visée, $\phi$'1 est celui de la direction du foyer, $\Delta$P est la valeur de déformée transversale au niveau à chacune des portions centrales.

**76.** Système selon les revendications 3, 5, 16 et 71, **caractérisé en ce que** pour une direction d'illumination d'au moins un canal, selon laquelle des moyens illuminateurs reçoivent des signaux, une correction de déformée est réalisée au niveau d'au moins une des portions centrales par variation du déphasage de $\Delta$P (2$\Pi$/C) (f Cos($\phi$2)- (f+ F) Cos($\phi$1) - Fe Cos($\phi$'1)), où f est la fréquence côté terre, Fe est la valeur de la translation externe comptée de même signe que F si les changements de fréquence sont dans le même sens, F est la totalité de la translation de fréquence, $\phi$1 est l'angle d'incidence de l'illumination, $\phi$2 est celui de la direction visée, $\phi$'1 est celui de la direction du foyer et $\Delta$P est la valeur de déformée transversale au niveau à chacune des portions centrales.

**77.** Système selon les revendications 3, 5 et 71, prises en combinaison avec l'une des revendications 19 ou 20, **caractérisé en ce que** pour une direction d'illumination d'au moins un canal, selon laquelle des moyens illuminateurs reçoivent des signaux, une correction de déformée est réalisée au niveau d'au moins une des portions centrales par variation du déphasage de $\Delta$P (2$\Pi$/C) (f Cos($\phi$2) + Fe Cos($\phi$'2) - (f+ F) Cos($\phi$1)), où f est la fréquence côté terre, Fe est la valeur de la translation externe comptée de même signe que F si les changements de fréquence sont dans le même sens, F est la totalité de la translation de fréquence, $\phi$1 est l'angle d'incidence de l'illumination, $\phi$2 est celui de la direction visée, $\phi$'2 est celui de la direction du foyer sol ou du foyer opposé et $\Delta$P est la valeur de déformée transversale au niveau à chacune des portions centrales.

**Patentansprüche**

**1.** System mit einer Hochfrequenzantenne, die sich in einem Orbit um die Erde befindet, sowie Strahlereinrichtungen zum Senden und/oder Empfangen, die sich ebenfalls im Orbit um die Erde an Bord wenigstens eines Satelliten neben demjenigen mit der Antenne befinden, wobei sich die Antenne im Strahlungsfeld der Einrichtungen befindet, **dadurch gekennzeichnet, dass** die Antenne eine Hochfrequenzantenne zum Senden und/oder Empfangen ist, die aus einem Netz von Einzelsegmenten besteht, wobei diese Antenne Phasenverschiebungsund/oder Verzögerungseinrichtungen aufweist, die mit den Einzelsegmenten verbunden sind, wobei die durch die Einzelsegmente empfangenen Signale die Phasenverschiebungs- und/oder Verzögerungseinrichtungen durchlaufen, bevor sie über die genannten Einzelsegmente erneut ausgesendet werden, wobei die Phasenverschiebungs- und/oder Verzögerungseinrichtungen geeignet sind, die Hochfrequenzsignale, die einem oder mehreren Kanälen entsprechen, die durch die Strahlereinrichtungen ausgesendet werden, umzuleiten, um sie in einem oder mehreren Bündeln zur Erde weiterzuleiten, und/oder die Hochfrequenzsignale eines oder mehrerer Bündel, die von der Erde ausgesendet wurden, umzuleiten, um sie in einem oder mehreren Kanälen zu den Strahlereinrichtungen weiterzuleiten.

2. System nach Anspruch 1, **dadurch gekennzeichnet, dass** sich die Strahlereinrichtungen auf wenigstens einem Satelliten befinden, der im Wesentlichen im gleichen Orbit wie derjenige fliegt, auf dem sich die Antenne befindet.

3. System nach einem der Ansprüche 1 oder 2, **dadurch gekennzeichnet, dass** die Hochfrequenzantenne im Wesentlichen eben ist, wobei die Signale die genannte Antenne von der einen zu der anderen Fläche durchqueren, und dass für wenigstens einen Kanal und eine Durchgangsrichtung es bei einer Strahlungsrichtung, in der die Strahlereinrichtungen Signale an die und von der Antenne senden und/oder empfangen, einem Autokompensation genannten Kegel von Beobachtungslinien zur und von der Erde entspricht, die definiert sind durch eine gemeinsame Anstelllinie auf der Antennenebene, genannt Autokompensationsanstelllinie (wobei die Anstelllinie in einer Richtung zwischen sich und der Normalen auf der Antennenebene einen Winkel einschließt), wobei die Autokompensationsbeobachtungslinien derart liegen, dass die Biegungslinien der Antenne transversal zur Grundebene der Antenne und die Abweichungen des Winkels der Antenne zur Flugrichtung um jede Achse in dieser Ebene im Wesentlichen ohne Auswirkung auf dieselben Signale bleiben, die zu oder von dieser Autokompensationsbeobachtungslinie umgeleitet werden, und nur geringe Auswirkung auf benachbarte Beobachtungslinien haben.

4. System nach einem der vorangehenden Ansprüche, **dadurch gekennzeichnet, dass** jedes Einzelsegment wenigstens einen Zentralabschnitt aufweist, der einem gegebenen Kanal und einer Durchgangsrichtung eindeutig zugeordnet ist und der über Umgruppierungs- und/oder Extraktionseinrichtungen beim Durchgang einerseits oberhalb mit wenigstens einem Punkt für das Empfangen von Signalen und andererseits unterhalb mit wenigstens einem Punkt für das Senden von Signalen verbunden ist, und dass die Einrichtungen für die Phasenverschiebung oder die Verzögerung zwischen den Sende- und Empfangspunkten bei dem Zentralabschnitt, soweit die allgemeine Verzögerung und Phasenverschiebung betroffen sind, und bei den Zweigen, soweit die differenzielle Verzögerung und/oder Phasenverschiebung betroffen sind, bei dem Umleiten eingesetzt werden.

5. System nach Anspruch 4, **dadurch gekennzeichnet, dass** es Einrichtungen umfasst, mit denen es möglich ist, die Phasenverschiebung und/oder Verzögerung je nach den unterschiedlichen Durchgangswegen zu variieren.

6. System nach Anspruch 4, **dadurch gekennzeichnet, dass** wenigstens ein Teil der Einrichtungen für die Verbindung zwischen dem oder den Punkten für das Empfangen und dem oder den Punkten für das Senden verschiedenen Kanälen gemeinsam ist und dass Einrichtungen zum Diskriminieren verschiedener Kanäle auf Höhe von wenigstens einem Übergang zwischen einem gemeinsamen Abschnitt des Durchgangswegs und speziellen Abschnitten von Durchgangswegen angeordnet sind.

7. System nach einem der vorangehenden Ansprüche, **dadurch gekennzeichnet, dass** die Antenne Einrichtungen zum Umsetzen der Frequenz der Signale bei ihrer Umleitung für wenigstens einen Kanal und einen Durchgangsweg umfasst.

8. System nach einem der vorangehenden Ansprüche, **dadurch gekennzeichnet, dass** bei wenigstens einem Kanal und wenigstens einem Durchgangsweg die Signale vor und nach der Antenne auf der gleichen Frequenz liegen.

9. System nach Anspruch 3 in Verbindung mit Anspruch 8, **dadurch gekennzeichnet, dass** bei einer Strahlungsrichtung bei wenigstens einem Kanal, auf dem die Strahlereinrichtungen Signale an die und von der Antenne senden und/oder empfangen, und wenigstens einer Durchgangsrichtung die Autokompensationsanstelllinie der Anstelllinie der Strahlungsrichtung entspricht.

10. System nach Anspruch 7, **dadurch gekennzeichnet, dass** für wenigstens einen Kanal und wenigstens einen Durchgangsweg die Signale vor und nach der Antenne auf einer anderen Frequenz liegen und dass die verwendete Umsetzungsfrequenz nicht von Signalen vorgegeben wird, die auf einer der Flächen des Einzelsegments empfangen wurden.

11. System nach Anspruch 3 in Verbindung mit Anspruch 10, **dadurch gekennzeichnet, dass** bei einer Strahlereinrichtung bei wenigstens einem Kanal, auf dem die Strahlereinrichtungen Signale an die und von der Antenne senden und/oder empfangen, und wenigstens einer Durchgangsrichtung der Anstellkosinus der Autokompensationsbeobachtungslinie und der Anstellkosinus. der Strahlungsrichtung ein Verhältnis zueinander haben, das im Wesentlichen den zentralen Frequenzen des Kanals auf der Seite der Strahlung und auf der Seite der Erde entspricht.

**12.** System nach Anspruch 7, **dadurch gekennzeichnet, dass** bei wenigstens einem Kanal und wenigsten einem Durchgangsweg die Signale vor und nach der Antenne auf einer anderen Frequenz liegen und dass die Umsetzungsfrequenz von einem extern genannten Umsetzungssignal vorgegeben wird, das auf einer Fläche des Einzelsegments empfangen wurde.

**13.** System nach Anspruch 7, **dadurch gekennzeichnet, dass** bei wenigstens einem Kanal und wenigsten einem Durchgangsweg die Signale vor und nach der Antenne auf einer anderen Frequenz liegen und dass die Umsetzung der Frequenz zwei aufeinander folgenden Umsetzungen entspricht oder äquivalent ist, von denen eine extern genannt wird, deren Umsetzungsfrequenz, genannt Fe, von einem externen Umsetzungssignal vorgegeben wird, das auf einer Fläche des Einzelsegments empfangen wurde, und von denen die andere intern genannt wird und eine Umsetzungsfrequenz Fi hat, die keine Beziehung zu einem Signal hat, das auf der einen oder anderen Fläche des Einzelsegments empfangen worden ist.

**14.** System nach Anspruch 8, **dadurch gekennzeichnet, dass** die Strahlereinrichtungen mehrere Untergruppenstrahler aufweisen und dass verschiedene Signale desselben Kanals, die zu den mehreren Untergruppenstrahlern gesendet werden oder von diesen stammen, sich zwischen Erde und Antenne auf mehrere Sende- und/oder Empfangsbündel aufteilen, deren Winkel von der Antenne aus gesehen im Wesentlichen dem Winkel entspricht, unter dem von der Antenne aus die verschiedenen Untergruppen gesehen werden, die diesen Kanal bestrahlen, wobei diese Geometrie gegebenenfalls durch eine Anisotropie modifiziert wird.

**15.** System nach Anspruch 7, **dadurch gekennzeichnet, dass** die Strahlereinrichtungen mehrere Untergruppenstrahler umfassen und dass bei einem gegebenen Kanal, bei dem die Antenne eine Frequenzumsetzung durchführt, die verschiedenen Signale, die zu den mehreren Untergruppenstrahlern gesendet werden oder von diesen stammen, sich auf mehrere Sende- und/oder Empfangsbündel zur Erde aufteilen, deren Winkel von der Antenne aus gesehen im Wesentlichen dem Winkel entspricht, unter dem von der Antenne aus die verschiedenen Untergruppen gesehen werden, die diesen Kanal bestrahlen, wobei nach Multiplikation aller Winkelabstände mit dem Verhältnis der Zentralfrequenzen des Kanals auf Seiten des Strahlers und auf Seiten der Erde diese Geometrie gegebenenfalls durch eine Anisotropie modifiziert wird.

**16.** System nach Anspruch 12 oder 13, eventuell in Verbindung mit Anspruch 15, **dadurch gekennzeichnet, dass** das externe Umsetzungssignal, das bei wenigstens einem Kanal verwendet wird, durch die Strahlereinrichtungen ausgesendet wird und durch die Fläche der Antenne empfangen wird, die auf der Bestrahlungsseite liegt, und dass für den Fall, dass die Strahlereinrichtungen sich auf Untergruppenstrahler aufteilen, das externe Umsetzungssignal durch eine als Mittelpunkt bezeichnete Untergruppe ausgesendet wird, die eventuell auf diese Funktion eingeschränkt ist.

**17.** System nach Anspruch 3 und 16, **dadurch gekennzeichnet, dass** bei einer Strahlungsrichtung bei wenigstens einem Kanal, auf dem Strahlereinrichtungen Signale zu der Antenne senden und gleichzeitig das externe Umsetzungssignal senden, der Anstellkosinus der Autokompensationslinie und der Anstellkosinus der Bestrahlungsrichtung im Wesentlichen das Verhältnis (f+F-Fe)/f einhalten, wobei f die Frequenz auf der Seite der Erde ist, Fe der Wert der externen Umsetzung ist und F die gesamte Frequenzumsetzung ist, und dass für den Fall, dass die Strahlereinrichtungen auf Untergruppen verteilt sind, sich der Abstand der Anstelllinie zwischen der betrachteten Bestrahlung und dem Mittelpunkt im Wesentlichen widerspiegelt im Abstand zwischen den Autokompensationsanstelllinien, die der Bestrahlung entsprechen, und denen, die dem Mittelpunkt entsprechen würden, bei Multiplikation mit den Termen (f+F/f) und (Sin($\phi$1)/Sin($\phi$2), wobei $\phi$1 der Anstellwinkel der Bestrahlung des Mittelpunkts und $\phi$2 der Anstellwinkel der Autokompensation ist, der sich ergibt, wenn der Mittelpunkt sendet.

**18.** System nach Anspruch 17, **dadurch gekennzeichnet, dass** Fe und F dasselbe Vorzeichen haben, d.h. die Frequenz im gleichen Sinne verändern.

**19.** System nach einem der Ansprüche 12 oder 13, **dadurch gekennzeichnet, dass** ein externes Umsetzungssignal, das bei wenigstens einem Kanal beim Empfangen verwendet wird, auf der Fläche des Einzelsegments, wo der Empfang erfolgt, empfangen wird und von einem Bodenpunkt, der Boden-Mittelpunkt genannt wird, ausgesendet wird.

**20.** System nach einem der Ansprüche 12 oder 13, **dadurch gekennzeichnet, dass** ein externes Umsetzungssignal, das bei wenigstens einem Kanal beim Empfangen verwendet wird, auf der Fläche des Einzelsegments, wo der Empfang erfolgt, empfangen wird und von wenigstens einem Satelliten ausgesendet wird, der sich im Wesentlichen in demselben Orbit wie die Antenne und die Strahlereinrichtungen befindet, wobei dieser Satellit in Bezug auf die Antenne gegenüber den Strahlereinrichtungen angeordnet ist, wobei die Sendeeinrichtungen des Signals gegenüberliegender Mittelpunkt genannt werden.

**21.** System nach Anspruch 3 in Verbindung mit einem der Ansprüche 19 oder 20, **dadurch gekennzeichnet, dass** bei einer Bestrahlungsrichtung bei wenigstens einem Kanal, auf dem die Strahlereinrichtungen Signale empfangen, der Anstellwinkel der Autokompensation im Wesentlichen gleich $\phi 2 + (\text{Cos}(\phi 2) (f+Fe)-\text{Cos}(\phi 1) (F+f))/\text{Sin}(\phi 2)$ f ist, wobei $\phi 1$ und $\phi 2$ die Anstellwinkel der Bestrahlungsrichtung und des externen Umsetzungssignals sind, f die Frequenz auf der Seite der Erde ist, Fe der Wert der externen Umsetzung ist und F die gesamte Frequenzumsetzung ist.

**22.** System nach Anspruch 21, **dadurch gekennzeichnet, dass** Fe und F dasselbe Vorzeichen haben, d.h. die Frequenz im gleichen Sinne ändern.

**23.** System nach den Ansprüchen 12, 18, 19 und 22 in Verbindung miteinander, **dadurch gekennzeichnet, dass** bei wenigstens einem Kanal für das Senden und Empfangen die Frequenz Fe gleich der Frequenz F für die zwei Durchgangswege ist und sich wenigstens ein Boden-Mittelpunkt in der Nähe einer Beobachtungslinie für die Autokompensation der Abstrahlung, die den Strahlereinrichtungen entspricht, befindet.

**24.** System nach den Ansprüchen 18 und 22 in Verbindung mit einem der Ansprüche 19 oder 20, **dadurch gekennzeichnet, dass** bei wenigstens einem Kanal für das Senden und das Empfangen der Winkel der Antenne zur Flugrichtung sowie die Frequenzen Fi und Fe sowohl für das Senden als auch das Empfangen derart sind, dass die Autokompensationsbeobachtungslinien identisch mit den beiden Durchgangswegen sind trotz fehlender Ausrichtung des gegenüberliegenden Mittelpunkts mit den Strahlereinrichtungen für das Empfangen oder trotz Abweichung des Boden-Mittelpunkts von dem Zentrum des abzudeckenden Bereichs.

**25.** System nach Anspruch 3 in Verbindung mit Anspruch 16, **dadurch gekennzeichnet, dass** bei einer Bestrahlungsrichtung bei wenigstens einem Kanal, auf dem die Strahlereinrichtungen Signale empfangen, die Umsetzung um die Frequenz Fe aufgrund von dem externen Signal erfolgt, das auf der Bestrahlungsfläche empfangen wurde, und die Autokompensationsanstelllinie derart ist, dass $\cos(\phi 2)/\cos(\phi 1) = (f + Fe + F)/f$ gilt, wobei $\phi 1$ und $\phi 2$ der Anstellwinkel der Bestrahlungsrichtung und der Anstellwinkel der Autokompensation ist, f die Frequenz auf der Seite der Erde ist, Fe der externe Umsetzungswert ist und F die gesamte Frequenzumsetzung ist.

**26.** System nach Anspruch 25, **dadurch gekennzeichnet, dass** Fe und F umgekehrte Vorzeichen haben, d.h. die externe Umsetzung Fe den zu der gesamten Umsetzung F entgegen gesetzten Sinn hat.

**27.** System nach Anspruch 26, **dadurch gekennzeichnet, dass** bei wenigstens einem Kanal für das Empfangen $|Fe| = |F|$ und $Fi = 2 |F|$ gilt.

**28.** System nach Anspruch 18 in Verbindung mit Anspruch 26, **dadurch gekennzeichnet, dass** bei wenigstens einem Kanal für das Senden und Empfangen $|Fe| = |F|$ und $Fi = 2 |F|$ beim Empfangen und $Fe = F$ beim Senden gilt und dass die Autokompensationsbeobachtungslinien im Wesentlichen identisch mit den beiden Durchgangswegen sind.

**29.** System nach Anspruch 3 in Verbindung mit Anspruch 16, **dadurch gekennzeichnet, dass** bei einer Bestrahlungsrichtung bei wenigstens einem Kanal, auf dem die Strahlereinrichtungen Signale empfangen, die Umsetzung Fe aufgrund von dem externen Signal erfolgt, das durch die Bestrahlungsfläche empfangen wurde, und denselben Sinn wie die Gesamtumsetzung F hat, dass F = Fe ist und dass die Autokompensationsanstelllinie gegeben ist durch $\phi 2 - \phi 1 = -2 \text{Ctg}(\phi 1) F/f$, wobei $\phi 1$ und $\phi 2$ der Anstellwinkel aus Bestrahlungsrichtung und der Anstellwinkel der Autokompensation ist, wobei f die Frequenz auf der Seite der Erde ist, Fe der Umsetzungswert ist und F die gesamte Frequenzumsetzung ist.

**30.** System nach Anspruch 3, **dadurch gekennzeichnet, dass** der Winkel der Antenne zur Flugrichtung derart ist, dass der Winkelabstand zwischen der Gruppe von möglichen Beobachtungslinien und den Autokompensationsbeobachtungslinien allgemein minimiert wird.

**31.** System nach Anspruch 3 in Verbindung mit einem der Ansprüche 12 oder 13, **dadurch gekennzeichnet, dass** der Winkel gegen die Flugrichtung und die Umsetzungsfrequenz oder -frequenzen Fe oder Fi derart sind, dass der Winkelabstand zwischen der Gruppe der möglichen Beobachtungslinien und den Autokompensationsbeobachtungslinien allgemein minimiert wird.

**32.** System nach Anspruch 3 in Verbindung mit einem der Ansprüche 12 oder 13, **dadurch gekennzeichnet, dass** der Winkel zur Flugrichtung und die Umsetzungsfrequenz oder -frequenzen Fe oder Fi derart sind, dass die verbliebenen Autokompensationen auf die beiden Durchgangswege verteilt sind.

**33.** System nach Anspruch 7, **dadurch gekennzeichnet, dass** die Antenne Einrichtungen umfasst, um verschiedene Frequenzumsetzungen bei den Hochfrequenzsignalen durchzuführen, die auf verschiedenen Kanälen gesendet oder empfangen worden sind.

**34.** System nach den Ansprüchen 1 in Verbindung mit Anspruch 5, **dadurch gekennzeichnet, dass** die Phasenverschiebungs- und/oder Verzögerungseinrichtungen so gesteuert werden, dass die Orientierung eines Bündels, das einem Kanal entspricht, in dem antennenfesten Bezugssystem trotz Modifizierungen der Orientierung der Bestrahlungsrichtung des Bündels in dem antennenfesten Bezugssystem unverändert bleibt.

**35.** System nach Anspruch 34 in Verbindung mit einem der Ansprüche 14 oder 15, **dadurch gekennzeichnet, dass** die Phasenverschiebungs- und/oder Verzögerungseinrichtungen derart gesteuert werden, dass die Orientierung einer Richtung eines eventuell virtuellen Bündels, die einer Richtung einer eventuell virtuellen Bestrahlung entspricht, die in Bezug auf Bestrahlungsrichtungen eines Kanals erfolgt, in dem antennenfesten Bezugssystem unverändert bleibt.

**36.** System nach Anspruch 35 in Verbindung mit Anspruch 4, **dadurch gekennzeichnet, dass** die Richtung des eventuell virtuellen Bündels, bei dem die Kompensation erfolgt, derart ausgewählt wird, dass der maximale Winkelabstand zwischen diesem Bündel und dem Bündel oder der Gruppe von Bündeln des Kanals minimiert wird, und dass der Schritt, gezählt in Wellenlängen der Zentralfrequenz des Kanals auf der Seite der Erde, zwischen den zentralen Punkten, die von dem Kanal genutzt werden, in Abhängigkeit von diesem maximalen Winkelabstand und der tolerierbaren Höhe der Keulen der Teilnetze zu dem oder den Bündeln des Kanals minimiert wird.

**37.** System nach Anspruch 34, **dadurch gekennzeichnet, dass** es Einrichtungen zum Steuern der Phasenverschiebungs- und/oder Verzögerungseinrichtungen umfasst, so dass die Richtung in dem terrestrischen Bezugssystem bei wenigstens einem Bündel bei wenigstens einem Kanal trotz Modifizierungen des Winkels der Antenne zur Flugrichtung und der sich daraus ergebenden Modifizierungen bezüglich der Orientierung von Bestrahlungsrichtungen in dem antennenfesten Bezugssystem unverändert bleibt.

**38.** System nach Anspruch 34, **dadurch gekennzeichnet, dass** der Satellit mit der Antenne und wenigstens ein Satellit mit Strahlereinrichtungen Einrichtungen zum Bestimmen der Orientierung der Bestrahlungsrichtung in dem antennenfesten Bezugssystem umfassen.

**39.** System nach Anspruch 34, **dadurch gekennzeichnet, dass** der Satellit mit der Antenne und wenigstens ein Satellit mit Strahlereinrichtungen Einrichtungen zum Bestimmen der Orientierung der Achse, die sie verbindet, in dem terrestrischen Bezugssystem umfassen.

**40.** System nach Anspruch 38 in Verbindung mit Anspruch 39, **dadurch gekennzeichnet, dass** die Orientierung der Bestrahlungsrichtung in dem antennenfesten Bezugssystem aufgrund der Kenntnis des Winkels der Antenne gegenüber der Flugrichtung und der Orientierung der Achse, die sie verbindet, in dem terrestrischen Bezugssystem bestimmt wird.

**41.** System nach Anspruch 38, **dadurch gekennzeichnet, dass** die Antenne Einrichtungen zum Vergleichen der Phasen und/oder Verzögerungen wenigstens eines Signals, das durch die Strahlereinrichtungen ausgesendet wird und von verschiedenen Punkten der Antenne empfangen wird, und Einrichtungen zum Bestimmen der Orientierung der Ankunftsrichtung des oder der Signale in dem antennenfesten Bezugssystem in Abhängigkeit von diesem Vergleich umfasst.

**42.** System nach Anspruch 39 in Verbindung mit Anspruch 41, **dadurch gekennzeichnet, dass** der Gier- und/oder Nickwinkel der Antenne in Flugrichtung aufgrund der Kenntnis der Orientierung der Ankunftsrichtung des oder der Signale in dem antennenfesten Bezugssystem und der Orientierung dieser Ankunftsrichtung in dem terrestrischen Bezugssystem bestimmt wird.

43. System nach Anspruch 39, **dadurch gekennzeichnet, dass** ein Satellit mit Strahlereinrichtungen Einrichtungen, um sich zu lokalisieren, oder Einrichtungen für das Empfangen von Radiolokalisierungssignalen sowie Einrichtungen zum Übertragen von Lokalisierungsinformationen oder Radiolokalisierungssignalen, die empfangen werden, an den Satelliten, der die Antenne trägt, umfasst, wobei letzterer Einrichtungen zum Bestimmen der Orientierung der Achse, die die beiden Satelliten verbindet, in dem terrestrischen Bezugssystem insbesondere in Abhängigkeit von diesen Informationen umfasst.

44. System nach Anspruch 35 in Verbindung mit Anspruch 41, **dadurch gekennzeichnet, dass** die aufgefundene Richtung der virtuellen Bestrahlung diejenige eines Untergruppenstrahlers ist, der das Messsignal aussendet, und dass die Messung direkt die für die Kompensation notwendige Information wiedergibt.

45. System nach Anspruch 15, **dadurch gekennzeichnet, dass** die Untergruppenstrahler sich auf demselben Satelliten befinden.

46. System nach einem der Ansprüche 14 oder 15, **dadurch gekennzeichnet, dass** die Untergruppenstrahler in einem gemeinsamen Orbit zueinander versetzt sind.

47. System nach einem der Ansprüche 14 oder 15, **dadurch gekennzeichnet, dass** die Untergruppenstrahler einen Abstand in Bezug auf Elliptizität und/oder Orbitebene voneinander haben.

48. System nach Anspruch 7, **dadurch gekennzeichnet, dass** bei einer Verzögerung des Zentralabschnitts wenigstens ein Kanal und die Umsetzungslinie, oder eine Referenz, aufgrund derer sie erzeugt werden kann, die verwendet wird, um die Frequenz des oder der Kanäle unterhalb der Verzögerung abzusenken, gemeinsam hindurch tritt, so dass die Einflüsse von Abweichungen bei der Verzögerung der Phase des umgeleiteten Signals begrenzt werden.

49. System nach Anspruch 7, **dadurch gekennzeichnet, dass** eine absteigende Umsetzung bei einem Kanal oder mehreren Kanälen oberhalb der Verzögerung des Zentralabschnitts erfolgt.

50. System nach Anspruch 49, **dadurch gekennzeichnet, dass** eine derartige absteigende Verzögerung einer ansteigenden Umsetzung nach der Verzögerung folgt, wobei eine Referenz verwendet wird, die dieser Verzögerung nicht unterworfen wurde, so dass die Einflüsse von Abweichungen der Verzögerung der Phase des umgeleiteten Signals begrenzt werden.

51. System nach Anspruch 6, **dadurch gekennzeichnet, dass** die Verzögerung bei dem Zentralabschnitt gemeinsam bei wenigstens zwei Kanälen in wenigstens einem Sinne der Durchgangswege erfolgt.

52. System nach den Ansprüchen 6 und 7, **dadurch gekennzeichnet, dass** die Frequenzumsetzung bei wenigstens einem Kanal und einem Durchgangsweg in dem Zentralabschnitt erfolgt.

53. System nach einem der Ansprüche 14 oder 15, **dadurch gekennzeichnet, dass** bei einer Anwendung auf Telekommunikationsübertragungen mehrere Kanäle sowie mehrere Untergruppenstrahler vorgesehen sind, wobei das Mosaik aus Boden-Bündeln aus dem feinen Muster zusammengesetzt ist, das durch die Antenne aufgrund des Winkels erzeugt wird, unter dem die Untergruppenstrahler durch sie gesehen werden, und welches sich in einem groben Muster wiederholt, das durch die Antenne aufgrund der verschiedenen Kanäle erzeugt wird.

54. System nach den Ansprüchen 53 und 47, **dadurch gekennzeichnet, dass** die Untergruppenstrahler, die einen gleichen Kanal bestrahlen, von der Antenne aus unter einem Winkel gesehen werden, der relativ stabil gegenüber einer Drehung mit der Orbital-Periode um sich selbst ist, und dass die mehreren Richtungen, die durch das grobe Muster des Kanals erzeugt werden, aufgrund der Phasenverschiebungs- und/oder Verzögerungseinrichtungen um eine zentrale Richtung und zwar in Phase mit der Drehung des feinen Musters präzedieren, so dass die Mosaikgruppe der Bündel eine stabile Struktur beibehält, abgesehen von einer Drehung um sich selbst im orbitalen Maßstab.

55. System nach Anspruch 2, **dadurch gekennzeichnet, dass** der Orbit der Satelliten ein niedriger Orbit ist und dass sich die Antenne im Wesentlichen in einer Ebene erstreckt, die durch die Erdmitte verläuft, dass eine Verschiebung der Ebene in Bezug auf die Orbitalebene die Bestrahlung auf einer Fläche ermöglicht dass auf der anderen Fläche wenigstens eines der Bündel abgelenkt wird, so dass die Erde sichtbar ist.

**56.** System nach Anspruch 55 in Verbindung mit Anspruch 46, **dadurch gekennzeichnet, dass** die Phasenverschiebungen und Verzögerungen derart sind, dass sich die Verschiebung der Untergruppenstrahler über die Bündel auf die in Bezug auf die Spur transversal verschobenen Ausleuchtungsbereiche am Boden auswirkt.

**57.** System nach Anspruch 2, **dadurch gekennzeichnet, dass** wenigstens zwei Antennensatelliten gemeinsame Strahlereinrichtungen nutzen.

**58.** System nach Anspruch 57, **dadurch gekennzeichnet, dass** sich wenigstens zwei Antennensatelliten auf derselben Seite von Strahlereinrichtungen im Orbit befinden und dass sie in demselben Orbit zueinander versetzt sind oder in Bezug auf Elliptizität und/oder Orbitebene versetzt sind.

**59.** System nach Anspruch 57, **dadurch gekennzeichnet, dass** sich wenigstens zwei Antennensatelliten beiderseits von Strahlereinrichtungen befinden.

**60.** System nach einem der Ansprüche 57 bis 59, **dadurch gekennzeichnet dass** ein Antennensatellit Strahlereinrichtungen für einen anderen Antennensatelliten trägt.

**61.** System nach Anspruch 60, **dadurch gekennzeichnet, dass** ein Prismensatellit Strahlereinrichtungen für einen anderen Prismensatelliten trägt und von Strahlereinrichtungen eines Prismensatelliten bestrahlt wird.

**62.** System nach den Ansprüchen 2 und 3, **dadurch gekennzeichnet, dass** die Achse, die auf der Antenne senkrecht steht, im Wesentlichen in der Orbitalebene liegt, wobei die Nickbewegung derart ist, dass der Autokompensationsbeobachtungskegel auf einer Autokompensationslinie auf die Erde trifft, die sich allgemein transversal zu dem Orbit erstreckt, und dass die Verschiebung am Boden im Wesentlichen entlang der Projektion des Orbits auf der Autokompensationslinie durch Verschieben des Satelliten und/oder Änderung der Nickbewegung der Antennenachse und/oder Änderung der Umsetzungsfrequenz für den Fall, dass dies wenigstens durch ein internes Signal sichergestellt ist, erfolgt, wobei die drei Mittel separat oder in Verbindung miteinander eingesetzt werden können.

**63.** System nach Anspruch 62, **dadurch gekennzeichnet, dass** die drei Boden-Beobachtungslinien entlang der Autokompensationslinie großflächig verteilt sind, so dass die Beschränkungen in Bezug auf die Verformung der Antenne sehr locker sind.

**64.** System nach Anspruch 2, **dadurch gekennzeichnet, dass** die Strahlereinrichtungen direkt von der Erde Signale empfangen, die ebenfalls über die Antenne empfangen worden sind, und dass eine Korrelation zwischen den beiden Ankunftswegen der Signale zu einer Diskriminierung in Bezug auf die Beobachtungsrichtung der Quelle dieser Signale als Funktion von dem Winkel wie auch der Ankunftsrichtung von Signalen mittels Antennenachse/Strahlereinrichtungen führt.

**65.** System nach Anspruch 64, **dadurch gekennzeichnet, dass** die Verschiebung der Beobachtungszone am Boden im Wesentlichen entlang der Projektion des Orbits, diskriminiert aufgrund der Korrelation, durch Verschieben des Satelliten und/oder durch Änderung des Diskriminierungswinkels erfolgt.

**66.** System nach Anspruch 65, **dadurch gekennzeichnet, dass** die Antenne in einer Richtung eine größere Ausdehnung als in den anderen Richtungen aufweist, so dass für wenigstens ein Bündel die Eingrenzung des Ausleuchtungsbereichs in eine Richtung transversal zu dem Orbit ermöglicht wird.

**67.** System nach Anspruch 65 in Verbindung mit Anspruch 66, **dadurch gekennzeichnet, dass** eine optische Abbildung des Bodens entlang zweier gekreuzter Komponenten durch Kombination der Korrelation und einer Ablenkung des Bündels erstellt wird.

**68.** System nach den Ansprüchen 63 in Verbindung mit Anspruch 67, **dadurch gekennzeichnet, dass** es Einrichtungen umfasst, um Beobachtungslinien am Boden aus einer elektronischen Ablenkung eines Bündels durch eine eindimensionale Steuerung zu erzeugen, und dass die große Dimension des Ausleuchtungsbereichs des Bündels, die sich aus der kleinen Ausdehnung der Antenne ergibt, entlang dem Orbit verläuft und es ermöglicht, die Autokompensationslinie für alle Positionen des Bündels abzudecken, trotz Krümmung dieser Linie und Eindimensionalität der Steuerung der Ablenkung.

**69.** System nach Anspruch 68, **dadurch gekennzeichnet, dass** die Antenne entlang der Nickachse verlängert ist.

**70.** System nach den Ansprüchen 67 in Verbindung mit Anspruch 55, **dadurch gekennzeichnet, dass** die Antenne entlang der Gierachse verlängert ist.

**71.** System nach einem der vorangehenden Ansprüche, **dadurch gekennzeichnet, dass** die Antenne Einrichtungen aufweist, um die zu der Antennenebene transversale Biegungslinie ($\Delta$P) zu messen oder wiederherzustellen.

**72.** System nach Anspruch 71, **dadurch gekennzeichnet, dass** die Antenne Mittel zum Vergleichen der Phasen und/ oder Verzögerungen bei wenigstens einem Signal, das durch die Strahlereinrichtungen gesendet und an anderen Punkten der Antenne empfangen wurde, sowie Einrichtungen zum Bestimmen der zu der Antennenebene transversalen Biegungslinie ($\Delta$P) in Abhängigkeit von diesem Vergleich umfasst.

**73.** System nach den Ansprüchen 3, 5, 8 und 71, **dadurch gekennzeichnet, dass** bei einer Bestrahlungsrichtung bei wenigstens einem Kanal, auf dem die Strahlereinrichtungen Signale an die und von der Antenne senden und/oder empfangen, und wenigstens einer Durchgangsrichtung eine Korrektur der Biegungslinie durch Variieren der Phasenverschiebung um den Wert $\Delta$P (2$\Pi$ f/C) (Cos($\phi$2)-Cos($\phi$1)) in Höhe wenigstens eines der Zentralabschnitte erfolgt, wobei $\phi$1 der Anstellwinkel der Bestrahlung ist, $\phi$2 derjenige der Beobachtungsrichtung ist, f die Frequenz auf Seiten der Erde und auf Seiten der Bestrahlung ist und $\Delta$P der Wert der transversalen Biegungstinie in Höhe jedes der Zentralabschnitte ist.

**74.** System nach den Ansprüchen 3, 5, 10 und 71, **dadurch gekennzeichnet, dass** bei einer Bestrahlungsrichtung bei wenigstens einem Kanal, auf dem die Strahlereinrichtungen Signale an die und von der Antenne senden und/ oder empfangen, und wenigstens einer Durchgangsrichtung eine Korrektur der Biegungslinie durch Variieren der Phasenverschiebung um den Wert $\Delta$P (2$\Pi$/C) (f2 Cos($\phi$2)- f1 Cos($\phi$1)) in Höhe wenigstens eines der Zentralabschnitte erfolgt, wobei $\phi$1 der Anstellwinkel der Bestrahlung ist, $\phi$2 derjenige der Beobachtungsrichtung ist, f2 und f1 die Frequenzen auf der Seite der Erde und der Seite der Bestrahlung sind und $\Delta$P der Wert der transversalen Biegungslinie in Höhe jedes der Zentralabschnitte ist.

**75.** System nach den Ansprüchen 3, 5, 16 und 71, **dadurch gekennzeichnet, dass** für eine Bestrahlungsrichtung bei wenigstens einem Kanal, auf dem die Strahlereinrichtungen Signale an die Antenne senden, eine Korrektur der Biegungslinien durch Variieren der Phasenverschiebung um $\Delta$P (2$\Pi$/C) (f Cos($\phi$2)-(f+F) Cos($\phi$1) + Fe Cos($\phi$'1)) in Höhe wenigstens eines der Zentralabschnitte erfolgt, wobei f die Frequenz auf der Seite der Erde ist, Fe der Wert der externen Umsetzung ist, berechnet mit demselben Vorzeichen wie F, wenn die Änderungen der Frequenz in demselben Sinne erfolgen, F die gesamte Umsetzung der Frequenz ist, $\phi$1 der Anstellwinkel der Bestrahlung ist, $\phi$2 derjenige der Beobachtungsrichtung ist, $\phi$'1 derjenige der Richtung des Mittelpunkts ist, $\Delta$P der Wert der transversalen Biegungslinie in Höhe jedes der Zentralabschnitte ist.

**76.** System nach den Ansprüchen 3, 5, 16 und 71, **dadurch gekennzeichnet, dass** für eine Bestrahlungsrichtung bei wenigstens einem Kanal, auf dem die Strahlereinrichtungen Signale empfangen, eine Korrektur von Biegungslinien durch Variieren der Phasenverschiebung um $\Delta$P (2$\Pi$/C) (f Cos($\phi$2)- (f+F) Cos($\phi$1) - Fe Cos($\phi$'1)) in Höhe wenigstens eines der Zentralabschnitte erfolgt, wobei f die Frequenz auf der Seite der Erde ist, Fe der Wert der externen Umsetzung ist, gezählt mit demselben Vorzeichen wie F, wenn die Änderungen der Frequenz in demselben Sinne erfolgen, F die gesamte Umsetzung der Frequenz ist, $\phi$1 der Anstellwinkel der Bestrahlung ist, $\phi$2 derjenige der Beobachtungsrichtung ist, $\phi$'1 derjenige der Richtung des Mittelpunkts ist und $\Delta$P der Wert der transversalen Biegungslinie in Höhe jedes der Zentralabschnitte ist.

**77.** System nach den Ansprüchen 3, 5 und 71 in Verbindung mit Anspruch den Ansprüchen 19 oder 20, **dadurch gekennzeichnet, dass** für eine Bestrahiungsrichtung bei wenigstens einem Kanal, auf dem die Strahlereinrichtungen Signale empfangen, eine Korrektur der Biegungslinie durch Variieren der Phasenverschiebung um $\Delta$P (2$\Pi$/ C) (f Cos($\phi$2)+ Fe Cos($\phi$'2) - (f+F) Cos($\phi$1)) in Höhe wenigstens eines der Zentralabschnitte erfolgt, wobei f die Frequenz auf der Seite der Erde ist, Fe der Wert der externen Umsetzung ist, berechnet mit demselben Vorzeichen wie F, wenn die Änderungen der Frequenz in demselben Sinne erfolgen, F die gesamte Umsetzung der Frequenz ist, $\phi$1 der Anstellwinkel der Bestrahlung ist, Ö2 derjenige der Beobachtungsrichtung ist, $\phi$'2 derjenige der Richtung des gegenüberliegenden Boden-Mittelpunkts ist, $\Delta$P der Wert der transversalen Biegungslinie in Höhe jedes der Zentralabschnitte ist.

## Claims

1.  System comprising a radio-frequency antenna placed in an orbit around the earth, and illuminating means for transmitting and/or receiving likewise orbiting around the earth located on at least a satellite separate from the one bearing the antenna, the antenna being located in the illuminating field of the said means, **characterized in that** the antenna is a transmitting and/or receiving radiofrequency antenna formed of a mesh of tiles, this antenna comprising phase-shifting and/or delaying means connected to these tiles, the signals received by the tiles passing through the phase-shifting and/or delaying means before being retransmitted on the said tiles, these phase-shifting and or delaying means being capable of diverting the radio-frequency signals corresponding to one or several channels transmitted by the illuminating means to send them back to the earth along one or several beams and/or of divesting the radio-frequency signals corresponding to one or several beams transmitted from the earth to send them back to the illuminating means along one or several channels.

2.  System according to Claim 1, **characterized in that** the illuminating means are borne by at least one satellite substantially in the same orbit as the one bearing the antenna.

3.  System according to either of Claims 1 and 2, **characterized in that** the radiofrequency antenna is substantially flat, the signals passing from one face to the other of the said antenna and for at least one channel and in one path direction, it corresponds, to a direction of illumination along which the illuminating means transmit and/or receive signals to and from the antenna, a cone of "self-compensation" sightings to and from the earth defined by a common incidence on the plane of the antenna, called self-compensation incidence (the incidence of a direction being the angle that this direction makes with the normal to the plane of the antenna), the self-compensation sightings being such that the deformations of the antenna transverse to the general plane of the antenna and the attitude errors of the antenna about any axis contained within the said plane are substantially without effect on these same signals diverted to or from this self-compensation sighting and of small effect in the neighboring sighting directions.

4.  System according to one of the preceding claims, **characterized in that** each tile includes at least a central portion, unique for a given channel and a path direction, connected by grouping and/or splitting means upstream on the path at at least one signal receiving point and downstream at at least one signal transmitting point and **in that** means for applying phase-shifting and or delaying between the transmitting and receiving points for ensuring diversion are applied on the central portion with regard to the common delaying and phase-shifting and on the branches with regard to the differential delaying or phase-shifting.

5.  System according to Claim 4, **characterized in that** it includes means enabling the phase-shifting and/or delays applied on the different paths to be varied.

6.  System according to Claim 4, **characterized in that** at least a part of the connecting means between the receiving point or points and the transmission point or points is common to different channels and **in that** means enabling these different channels to be discriminated are disposed at the level of at least one junction between a portion of common path and portions of specific paths.

7.  System according to one of the preceding claims, **characterized in that** the antenna includes means for translating the frequency of the signals at the time of their diversion, for at least one channel and one path.

8.  System according to one of the preceding claims, **characterized in that** for at least one channel and at least one path, the signals use the same frequency before and after the antenna.

9.  System according to Claims 3 and 8 taken in combination, **characterized in that** for an illumination direction of at least one channel along which illuminating means transmit and/or receive signals to and from the antenna and at least one path direction, the self-compensation incidence is equal to the incidence of the illumination direction.

10. System according to Claim 7, **characterized in that** for at least one channel and at least one path, the signals use a different frequency before and after the antenna and **in that** the translation frequency used does not originate from signals received on one of the faces of the tile.

**11.** System according to Claims 3 and 10 taken in combination, **characterized in that** for an illumination direction of at least one channel along which illuminating means transmit and/or receive signals to and from the antenna and at least one path direction, the cosine of the self-compensation sighting incidence and the cosine of the illumination direction incidence are substantially in the ratio of the central frequencies of the illumination side and earth side channel.

**12.** System according to Claim 7, **characterized in that** along at least one channel and at least one path, the signals use a different frequency before and after the antenna and **in that** the translation frequency originates from an "external" translation signal received by a tile face.

**13.** System according to Claim 7, **characterized in that** along at least one channel and at least one path, the signals use a different frequency before and after the antenna and **in that** the translation frequency results from or is equivalent to two consecutive translations, one of which is called external and whose translation frequency, termed Fe, originates from an external translation signal received by a tile face and the other of which is called internal and which is of translation frequency Fi, is without reference to a signal received by one or other of the tile faces.

**14.** System according to Claim 8, **characterized in that** the illuminating means comprise a plurality of illuminating sub-assemblies and **in that** different signals from the same channel transmitted to the plurality of illuminating sub-assemblies or originating therefrom are divided between the earth and the antenna along a plurality of transmitting and/or receiving beams whose angular geometry seen from the antenna substantially corresponds to the relative angular geometry along which the different sub-assemblies illuminating this channel are seen from the antenna, this geometry being modified by an anisotropy where necessary.

**15.** System according to Claim 7, **characterized in that** the illuminating means comprise a plurality of illuminating sub-assemblies and **in that**, for a given channel for which the antenna implements a translation frequency, the different signals transmitted to the plurality of illuminating sub-assemblies or originating therefrom are divided along a plurality of transmitting and/or receiving beams toward the earth whose angular geometry seen from the antenna substantially corresponds to the relative angular geometry along which the different sub-assemblies illuminating this channel are seen from the antenna, after multiplication of all the angular differences by the ratio of the central frequencies of the illuminating side and earth side channel, this geometry being modified by an anisotropy where necessary.

**16.** System according to Claims 12 or 13, possibly taken in combination with Claim 15, **characterized in that** the external translation signal used along at least one channel is transmitted by the illuminating means and received by the antenna face which is on the illumination side, and **in that** in the case where the illuminating means are split into illuminating sub-assemblies, the external translation signal is transmitted by a sub-assembly called a focus, possibly limited to this function.

**17.** System according to Claims 3 and 16, **characterized in that** for an illumination direction of at least one channel, along which illuminating means transmit signals to the antenna while transmitting the external translation signal, the cosine of the self-compensation incidence and the cosine of the illumination direction incidence are substantially in the ratio (f + F - Fe) / f where f is the earth side frequency, Fe is the value of the external translation, and F is the total frequency translation, and **in that** in the case where the illuminating means are split into sub-assemblies, the difference in incidence between the illumination in question and the focus is substantially reproduced in the difference between the self-compensation incidences corresponding to the illumination and those that would correspond to the focus, using the multiplying terms (f+F/f) and (sin($\phi$1)/sin($\phi$2) where $\phi$1 is the illumination incidence angle of the focus and $\phi$2 the self-compensation incidence angle that would result if the focus transmitted.

**18.** System according to Claim 17, **characterized in that** Fe and F are of the same sign, i.e. relate to changes of frequency in the same direction.

**19.** System according to either of Claims 12 and 13, **characterized in that** an external translation signal used along at least one channel in receiving is received by the tile face along which receiving takes place and is transmitted from a ground point called ground focus.

**20.** System according to either of Claims 12 and 13, **characterized in that** an external translation signal used along at least one channel in receiving is received by the tile face along which receiving takes place and is transmitted by at least a satellite substantially in the same orbit as the antenna and the illuminating means, this satellite being arranged in relation to the antenna on the side opposite the illuminating means, the signal transmitting means being called opposite focus.

21. System according to Claim 3 taken in combination with one of Claims 19 or 20, **characterized in that** for an illumination direction of at least one channel, along which illuminating means receive signals, the self-compensation incidence angle is substantially equal to $\phi2 + (\cos(\phi2) (f+Fe)-\cos(\phi1) (F+f)) / \sin(\phi2) f$ where $\phi1$ and $\phi2$ are the angle of incidence of the illumination direction and that of the external translation signal, f the earth side frequency, Fe is the external translation value, and F is the total frequency translation.

22. System according to Claim 21, **characterized in that** Fe and F are of the same sign, i.e. relate to changes of frequency in the same direction.

23. System according to Claims 12, 18, 19 and 22 taken in combination, **characterized in that** for at least one channel used in transmitting and in receiving, the frequency Fe is equal to the frequency F for both paths and at least one ground focus is in the neighborhood of a transmission self-compensation sighting corresponding to these illuminating means.

24. System according to Claims 18 and 22 taken in combination with either of Claims 19 and 20, **characterized in that** for at least one channel used in transmitting and receiving, the attitude of the antenna, as well as the frequencies Fi and Fe both in transmission and reception, are such that the self-compensation sightings are identical on both paths despite the non-alignment of the opposite focus with the illuminating means used in receiving, or in spite of the distance between the ground focus and the center of the zone to be covered.

25. System according to Claims 3 and 16 in combination, **characterized in that** for an illumination direction of at least one channel, along which illuminating means receive signals, the translation of frequency Fe is done from the external signal received by the illumination face and the self-compensation incidence is such that cosine $(\phi2)/$ cosine $(\phi1) = (f +Fe + F)/f$ where $\phi1$ and $\phi2$ are the angle of incidence of the illumination direction and the angle of incidence of self-compensation, f being the earth side frequency, Fe the value of the external translation, F the total frequency translation.

26. System according to Claim 25, **characterized in that** Fe and F are of opposite signs, i.e. the external translation Fe is opposite in direction to the total translation F.

27. System according to Claim 26, **characterized in that** for at least one channel used in receiving $| Fe| =| F |$ and $|Fi|=2| F|$.

28. System according to Claims 18 and 26 in combination, **characterized in that**, for at least one channel used in transmitting and receiving, $| Fe| = | F|$ and $|Fi|=2|F|$ for receiving and Fe=F for transmitting and **in that** the self-compensation sightings are substantially the same on both paths.

29. System according to Claims 3 and 16 in combination, **characterized in that** for an illumination direction of at least one channel, along which illuminating means receive signals, the translation Fe is done from the external signal received by the illumination face and is of the same direction as the total translation F, **in that** F = Fe and **in that** the self-compensation incidence is given by $\phi2 - \phi1 = -2 \cot(\phi1) F/f$ where $\phi1$ and $\phi2$ are the angle of incidence of the illumination direction and the angle of incidence of self-compensation, f being the earth side frequency, Fe the value of the translation, F the total frequency translation.

30. System according to Claim 3, **characterized in that** the attitude of the antenna is such that the angular difference between all the possible sightings and the self-compensation sightings are globally minimized.

31. System according to Claim 3 taken in combination with either of Claims 12 and 13, **characterized in that** the attitude and the translation frequency or frequencies Fe or Fi are such that the angular difference between all the possible sightings and the self-compensation sightings are globally minimized.

32. System according to Claim 3 taken in combination with either of Claims 12 and 13, **characterized in that** the attitude and the translation frequency or frequencies Fe or Fi are such that the self-compensation residues are spread over both paths.

33. System according to Claim 7, **characterized in that** the antenna includes means for implementing different frequency translations on the radio-frequency signals transmitted or received along separate channels.

34. System according to Claims 1 and 5 taken in combination, **characterized in that** the phase-shifting and/or delaying means are controlled so as to keep the orientation of a beam corresponding to a channel unchanged in the reference frame associated with the antenna in spite of modifications to the orientation of the illumination direction used by the beam in the reference frame associated with the antenna.

35. System according to Claim 34 taken in combination with either of Claims 14 and 15, **characterized in that** the phase-shifting and/or delaying means are controlled so as to keep the orientation unchanged in the reference frame associated with the antenna, of a possibly virtual beam direction corresponding to a possibly virtual illumination direction referenced with respect to the illumination directions of a channel.

36. System according to Claim 35 taken in combination with Claim 4, **characterized in that** the direction of the possibly virtual beam, on which the compensation bears is chosen so as to minimize the maximum angular difference between this beam and the beam or set of beams of the channel and **in that** the increment, measured at the wavelength of the central frequency of the earth side channel, between the central points used by the channel is established as a function of this maximum angular difference and the tolerable level of the sub-array lobes accompanying the channel beam or beams.

37. System according to Claim 34, **characterized in that** it includes means for controlling the phase-shifting and/or delaying means so as to keep the direction of at least one beam of at least one channel unchanged in the earth reference frame in spite of modifications in the attitude of the antenna and modifications that result therefrom concerning the orientation of illumination directions in the reference frame associated with the antenna.

38. System according to Claim 34, **characterized in that** the satellite bearing the antenna and at least one satellite bearing the illuminating means include means for determining the orientation of the illumination direction in the reference frame associated with the antenna.

39. System according to Claim 34, **characterized in that** the satellite bearing the antenna and at least one satellite bearing illuminating means include means for determining the orientation of the axis joining them, in the earth reference frame.

40. System according to Claims 38 and 39 taken in combination, **characterized in that** the orientation of the illumination direction in the reference frame associated with the antenna is determined based on knowing the attitude of the antenna and the orientation of the axis joining them, in the earth reference frame.

41. System according to Claim 38, **characterized in that** the antenna includes means for comparing the phases and/or delays of at least one signal transmitted by the illuminating means and received at different points of the antenna and means for determining according to this comparison the orientation of the direction of arrival of the signal or signals, in the reference frame associated with the antenna.

42. System according to Claims 39 and 41 taken in combination, **characterized in that** the yaw and/or pitch attitude of the antenna is determined based on knowledge of the orientation in the antenna-related reference frame of the direction of arrival of the signal or signals and of the orientation in the earth reference frame of this arrival direction.

43. System according to Claim 39, **characterized in that** a satellite bearing illuminating means includes means for being located or means of receiving radiolocation signals, as well as means for transmitting the location information or the radiolocation signals that it receives to the satellite bearing the antenna, the latter including means for determining primarily according to this information the orientation of the axis joining the two satellites, in the earth reference frame.

44. System according to Claims 35 and 41 taken in combination, **characterized in that** the referenced virtual illumination direction is that of an illuminating sub-assembly, which transmits the measurement signal, and **in that** the measurement immediately gives the information needed for compensation.

45. System according to Claim 15, **characterized in that** illuminating sub-assemblies are on the same satellite.

**46.** System according to either of Claims 14 and 15, **characterized in that** illuminating sub-assemblies are offset from one another in a common orbit.

**47.** System according to either of Claims 14 and 15, **characterized in that** orbits of illuminating sub-assemblies have differences in ellipticity and/or orbital plane.

**48.** System according to Claim 7, **characterized in that** on a central portion delay, everything is routed to at least one channel and the translation line, or a reference enabling it to be created, used for reducing the frequency of the channel or channels downstream of the delay, so as to limit the impact of delay imperfections on the phase of the diverted signal.

**49.** System according to Claim 7, **characterized in that** a downlink translation is implemented on one channel or several channels upstream of the central portion delay.

**50.** System according to Claim 49, **characterized in that** such a downlink translation is followed by an uplink translation after the delay using a reference not having suffered this delay, so as to limit the impact of delay imperfections on the phase of the diverted signal.

**51.** System according to Claim 6, **characterized in that** the delay on the central portion is common to at least two channels on at least one path direction.

**52.** System according to Claims 6 and 7, **characterized in that** the frequency translation is implemented, on at least one channel and one path, in the central portion.

**53.** System according to either of Claims 14 and 15, **characterized in that**, in one telecommunications transmission application, it comprises a plurality of channels, together with a plurality of illuminating sub-assemblies, the beam mosaic on the ground consisting of the fine pattern generated by the antenna due to the angular geometry along which the illuminating sub-assemblies are seen by it, repeated along a wide pattern that is generated by the antenna due to the different channels.

**54.** System according to Claims 53 and 47, **characterized in that** the illuminating sub-assemblies illuminating the same channel are seen from the antenna according to a relatively stable angular geometry except for a rotation about itself at the orbital period and **in that** the plurality of directions ensured by the wide pattern of the channel precesses thanks to the phase-shifting and/or delaying means around a central direction and this in phase with the rotation of the fine pattern so that the mosaic of all the beams keeps a stable structure, apart from a rotation about itself on the orbital scale.

**55.** System according to Claim 2, **characterized in that** the orbit of the satellites is a low orbit and **in that** the antenna extends substantially in a plane that passes through the center of the earth, **in that** an offset of the plane in relation to the orbital plane enables illumination on one face, **in that** on the other face at least one of the beams is realigned to see the earth.

**56.** System according to Claim 55 taken in combination with Claim 46, **characterized in that** the phase shifts and delays are such that the offset of the illuminating sub-assemblies is expressed by beams with ground footprints offset transversely with respect to the track.

**57.** System according to Claim 2, **characterized in that** at least two antenna satellites use common illuminating means.

**58.** System according to Claim 57, **characterized in that** at least two antenna satellites are located on the same side, along the orbit, of the illuminating means, and **in that** they are offset on the same orbit or are offset in ellipticity and/or orbital plane.

**59.** System according to Claim 57, **characterized in that** at least two antenna satellites are on each side of the illuminating means.

**60.** System according to one of Claims 57 to 59, **characterized in that** one antenna satellite bears illuminating means for another antenna satellite.

**61.** System according to Claim 60, **characterized in that** one prism satellite bears illuminating means for another prism satellite and is illuminated by illuminating means borne by a prism satellite.

**62.** System according to Claims 2 and 3, **characterized in that** the axis normal to the antenna is substantially in the orbital plane, the pitch being such that the self-compensation sighting cone meets the earth along a self-compensation line globally stretching transversely to the orbit and **in that** the ground displacement, substantially along the projection of the orbit, of the line of self-compensation is created by the displacement of the satellite and/or by the change in pitch of the antenna axis and/or the change in translation frequency in the case where this is ensured at least by an internal signal, these three means being able to be used separately or in combination.

**63.** System according to Claim 62, **characterized in that** the ground sightings are spread in a swath along the line of self-compensation in such a way that the antenna's deformation constraints are very relaxed.

**64.** System according to Claim 2, **characterized in that** illuminating means receive signals directly from the earth also received via the antenna and **in that** a correlation between the two incoming signal paths makes a sighting discrimination of the source of these signals as a function of the angle that the direction of arrival of the signals makes with the antenna/illuminating means axis.

**65.** System according to Claim 64, **characterized in that** the displacement on the ground, substantially along the orbit's projection, of the sighting zone discriminated by correlation is achieved by the displacement of the satellite and/or by changing the angle of discrimination.

**66.** System according to Claim 65, **characterized in that** the antenna presents a larger dimension in one direction than in the other directions, which for at least one beam ensures the narrowness of the footprint on the ground in a direction transverse to the orbit.

**67.** System according to Claims 65 and 66 taken in combination, **characterized in that** ground imaging along two cross components is obtained by combining the correlation and a beam scan.

**68.** System according to Claims 63 and 67 taken in combination, **characterized in that** it includes means for performing ground sightings based on an electronic scan of a beam according to a monodimensional control and **in that** the large dimension of the beam footprint, which results from the small dimension of the antenna, is along the orbit and enables the coverage of the self-compensation line for all positions of the beam, in spite of the curvature of this line and the monodimensional nature of the scanning control.

**69.** System according to Claim 68, **characterized in that** the antenna is extended along the pitch axis.

**70.** System according to Claims 67 and 55 taken in combination, **characterized in that** the antenna is extended along the yaw axis.

**71.** System according to one of the preceding claims **characterized in that** the antenna has means for measuring or reconstructing the deformation ($\Delta$P) transverse to the plane of the antenna.

**72.** System according to Claim 71, **characterized in that** the antenna includes means for comparing the phases and/or delays of at least one signal transmitted by the illuminating means and received at different points of the antenna and means for determining according to this comparison the deformation ($\Delta$P) transverse to the plane of the antenna.

**73.** System according to Claims 3, 5, 8 and 71, **characterized in that** for an illumination direction of at least one channel along which illuminating means transmit and/or receive signals to and from the antenna and at least one path direction, a deformation correction is made by variation of the phase-shift value $\Delta$P (2$\Pi$ f/C) (cos($\phi$2) - cos ($\phi$1)) in at least one of the central portions, where $\phi$1 is the angle of incidence of illumination, $\phi$2 is that of the sighting direction, f is the earth side and illumination side frequency, and $\Delta$P is the transverse deformation value at each of the central portions.

**74.** System according to Claims 3, 5, 10 and 71, **characterized in that** for an illumination direction of at least one channel along which illuminating means transmit and/or receive signals to and from the antenna and at least one path direction, a deformation correction is made by variation of the phase-shift of value $\Delta$P (2$\Pi$ f/C)- f1 (cos($\phi$2)-

cos($\phi$1)) in at least one of the central portions, where $\phi$1 is the angle of incidence of illumination, $\phi$2 is that of the sighting direction, f2 and f1 are the earth side and illumination side frequencies, and $\Delta$P is the transverse deformation value at each of the central portions.

**75.** System according to Claims 3, 5, 16 and 71, **characterized in that** for an illumination direction of at least one channel, along which illuminating means transmit signals to the antenna, a deformation correction is made by variation of the phase-shift of $\Delta$P (2$\Pi$/C) (f cos($\phi$2 ) - (f+ F) cos($\phi$1) + Fe cos($\phi$'1)) in at least one of the central portions, where f is the earth side frequency, Fe is the measured external translation value of the same sign as F if the frequency changes are in the same direction, F is the total frequency translation, $\phi$1 is the angle of incidence of illumination, $\phi$2 is that of the sighting direction, $\phi$'1 is that of the focus direction, $\Delta$P is the transverse deformation value at each of the central portions.

**76.** System according to Claims 3, 5, 16 and 71, **characterized in that** for an illumination direction of at least one channel, along which illuminating means receive signals, a deformation correction is made in at least one of the central portions by variation of the phase-shift of $\Delta$P (2$\Pi$/C) (f cos($\phi$2) - (f+ F) cos($\phi$1) - Fe cos($\phi$'1)) where f is the earth side frequency, Fe is the measured external translation value of the same sign as F if the frequency changes are in the same direction, F is the total frequency translation, $\phi$1 is the angle of incidence of illumination, $\phi$2 is that of the sighting direction, $\phi$'1 is that of the focus direction and $\Delta$P is the transverse deformation value at each of the central portions.

**77.** System according to Claims 3, 5 and 71, taken in combination with one of Claims 19 or 20, **characterized in that** for an illumination direction of at least one channel, along which illuminating means receive signals, a deformation correction is made in at least one of the central portions by variation of the phase-shift of $\Delta$P (2$\Pi$/C) (f cos($\phi$2) + Fe cos($\phi$'2) - (f+ F) cos($\phi$1)) where f is the earth side frequency, Fe is the measured external translation value of the same sign as F if the frequency changes are in the same direction, F is the total frequency translation, $\phi$1 is the angle of incidence of illumination, $\phi$2 is that of the sighting direction, $\phi$'2 is that of the ground focus or opposite focus direction and $\Delta$P is the transverse deformation value at each of the central portions.

FIG.1

FIG.2

## FIG_3

## FIG_4

FIG.5